# EUROPEAN PATENT APPLICATION

(11) **EP 4 027 680 A1**
(43) Date of publication of application: **13.07.2022**
(21) Application number: 20860150.0
(22) Date of filing: 13.08.2020
(51) Int. Cl.: H04W 16/28, H04W 92/18, H04W 4/40

(54) **COMMUNICATION CONTROL DEVICE, COMMUNICATION CONTROL METHOD, AND COMMUNICATION CONTROL PROGRAM**

(30) Priority: 04.09.2019 JP 2019161588
(71) Applicant: Sony Group Corporation, Tokyo 108-0075 (JP)
(72) Inventor: TANG, Yifu, Tokyo 108-0075 (JP); UCHIYAMA, Hiromasa, Tokyo 108-0075 (JP); KUSASHIMA, Naoki, Tokyo 108-0075 (JP); FURUICHI, Sho, Tokyo 108-0075 (JP); MATSUDA, Hiroki, Tokyo 108-0075 (JP)
(74) Representative: Witte, Weller & Partner Patentanwälte mbB
(86) International application number: PCT/JP2020/030745
(87) International publication number: WO 2021/044819

(57) **Abstract**

A communication control apparatus (20) according to the present disclosure includes a control unit (24). The control unit (24) notifies at least one of a first communication device (40₁) and a second communication device (40₂) of beam information regarding a beam used by the first communication device (40₁) or the second communication device (40₂) in sidelink communication between the first communication device (40₁) and the second communication device (40₂).

## Description

### Field

The present disclosure relates to a communication control apparatus, a communication control method, and a communication control program.

### Background

Radio access schemes and radio networks for cellular mobile communication (hereinafter, also referred to as "Long Term Evolution (LTE)", "LTE-Advanced (LTE-A)", "LTE-Advanced Pro (LTE-A Pro)", "New Radio (NR)", "New Radio Access Technology (NRAT)", "Evolved Universal Terrestrial Radio Access (EUTRA)", or "Further EUTRA (FEUTRA)") have been reviewed in 3rd Generation Partnership Project (3GPP). Note that, in the following description, LTE includes LTE-A, LTE-A Pro, and EUTRA, and NR includes NRAT and FEUTRA. In LTE and NR, a base station apparatus (base station) is also referred to as evolved NodeB (eNodeB), and a terminal device (mobile station, a mobile station device, and a terminal) is also referred to as a user equipment (UE). LTE and NR are cellular communication systems in which a plurality of areas covered by the base station apparatus are arranged cellularly. A single base station apparatus may manage a plurality of cells.

In LTE, various types of vehicle-to-anything (V2X) communication in automobiles, such as vehicle-to-vehicle (V2V) communication, vehicle-to-pedestrian (V2P) communication, and vehicle-to-infrastructure/network (V2I/N) communication, have been supported. V2X in LTE supports use cases such as driving assistance, automatic driving, and warning to a pedestrian. In order to support V2X, sidelink (also referred to as device to device (D2D) communication) is used. Note that, sidelink communication including V2X communication is disclosed in, for example, Patent Literature 1.

### Citation List

### Patent Literature

Patent Literature 1: JP 2017-208796 A

### Summary

### Technical Problem

Meanwhile, D2D and V2X in the related art have supported broadcast communication. On the other hand, in order to support various use cases as described above, support for unicast communication and groupcast (multicast) communication has been studied in addition to the broadcast communication. From such a background, in order to realize high-quality unicast communication and groupcast communication in device-to-device communication (sidelink communication) between terminal devices represented by NR V2X, application of a multiple input multiple output (MIMO) technology or a beamforming technology to the device-to-device communication is required.

Therefore, the present disclosure proposes a technology that can realize high-quality sidelink communication in device-to-device communication between the terminal devices.

### Solution to Problem

According to the present disclosure, a communication control device is provided. The communication control apparatus includes a control unit. The control unit notifies at least one of a first communication device and a second communication device of beam information regarding a beam used by the first communication device or the second communication device in sidelink communication between the first communication device and the second communication device.

### Brief Description of Drawings

FIG. 1 is a diagram illustrating V2X communication.
FIG. 2 is a diagram illustrating an example of an overall image of V2X communication.
FIG. 3 is a diagram illustrating an example of a use case of V2X communication.
FIG. 4 is an example of V2V communication according to Scenario 1.
FIG. 5 is an example of V2V communication according to Scenario 2.
FIG. 6 is an example of V2V communication according to Scenario 3.
FIG. 7 is an example of V2V communication according to Scenario 4.
FIG. 8 is an example of V2V communication according to Scenario 5.
FIG. 9 is an example of V2V communication according to Scenario 6.
FIG. 10 is a diagram illustrating an overview of sidelink communication according to a first embodiment of the present disclosure.
FIG. 11 is a diagram illustrating an overview of sidelink communication according to a first embodiment of the present disclosure.
FIG. 12 is a diagram illustrating a configuration example of an information processing system according to a first embodiment of the present disclosure.
FIG. 13 is a diagram illustrating a specific configuration example of an information processing system.
FIG. 14 is a diagram illustrating a configuration example of a management apparatus according to a first embodiment of the present disclosure.
FIG. 15 is a diagram illustrating a configuration example of a base station apparatus according to a first embodiment of the present disclosure.
FIG. 16 is a diagram illustrating a configuration example of a terminal device according to a first embodiment of the present disclosure.
FIG. 17 is a sequence diagram illustrating a flow of sidelink communication processing according to a first embodiment of the present disclosure.
FIG. 18 is a diagram illustrating a configuration example of a base station apparatus according to a first modified example of a first embodiment of the present disclosure.
FIG. 19 is a sequence diagram illustrating a flow of sidelink communication processing according to a first modified example of a first embodiment of the present disclosure.
FIG. 20 is a diagram illustrating an overview of sidelink communication according to a second embodiment of the present disclosure.
FIG. 21 is a diagram illustrating a configuration example of a base station apparatus according to a second embodiment of the present disclosure.
FIG. 22 is a diagram illustrating a configuration example of a master terminal according to a second embodiment of the present disclosure.
FIG. 23 is a sequence diagram illustrating a flow of sidelink communication processing according to a second embodiment of the present disclosure.

### Description of Embodiments

Embodiments of the present disclosure will be described in detail below with reference to the drawings. Note that, in each of the following embodiments, the same parts are denoted by the same reference numerals, and an overlapped description will be omitted.

Furthermore, in the present specification and the drawings, a plurality of constituent elements having substantially the same functional configuration may be distinguished by attaching different numerals after the same reference numerals. For example, a plurality of constituent elements having substantially the same functional configuration are distinguished as base station apparatuses 20₁ and 20₂ as necessary. However, in a case where it is not particularly necessary to distinguish each of a plurality of the constituent elements having substantially the same functional configuration, only the same reference numeral is attached. For example, in a case where it is not necessary to particularly distinguish the base station apparatuses 20₁ and 20₂, the base station apparatuses are simply referred to as a base station apparatus 20.

Furthermore, the present disclosure will be described according to an order of items to be described below.
1. Introduction
1-1. Overall Image of V2X Communication
1-2. V2X Use Case
1-3. Physical Layer Enhancement
1-4. V2X Operation Scenario
2. First Embodiment
2-1. Overview of First Embodiment
2-2. Configuration of Information Processing System
2-3. Flow of Sidelink Communication Processing
3. Modified example of First Embodiment
3-1. First Modified Example
3-2. Second Modified Example
4. Second Embodiment
4-1. Overview of Second Embodiment
4-2. Configuration of Information Processing System
4-3. Flow of Sidelink Communication Processing
5. Modified Example of Second Embodiment
5-1. First Modified Example
5-2. Second Modified Example
6. Other Modified Examples
7. Conclusion

### <1. Introduction>

In the related art, a mobile communication system has provided a communication function for a mobile terminal such as a mobile phone or a smartphone. However, in recent years, it has been important for the mobile communication system to support communication for a mobile body different from a mobile terminal, such as an automobile, a drone, or a robot.

For example, in recent years, the mobile communication system is required to support vehicle-to-everything (V2X) communication as communication for automobiles. Examples of the communication for automobiles include road-vehicle communication realized by an intelligent transportation system (ITS) or the like, and vehicle-to-vehicle communication realized by sidelink communication or the like. These communication technologies may be important technologies for realizing future autonomous driving.

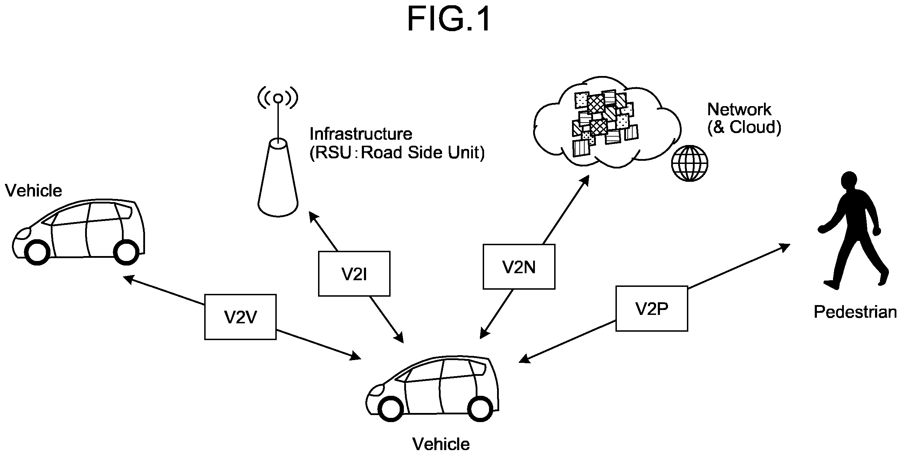

Here, V2X communication is communication between a vehicle and "something". FIG. 1 is a diagram illustrating the V2X communication. Here, examples of "something" include a vehicle, an infrastructure, a network, a pedestrian, and the like. Communication between vehicles is referred to as vehicle-to-vehicle (V2V) communication. Furthermore, communication between a vehicle and an infrastructure is referred to as vehicle-to-infrastructure (V2I) communication. Furthermore, communication between a vehicle and a network is referred to as vehicle-to-network (V2N) communication. Furthermore, communication between a vehicle and a pedestrian is referred to as vehicle-to-pedestrian (V2P) communication. Note that, in the present embodiment, each of the vehicle, the infrastructure, the network, and the pedestrian in V2X may communicate with the others as a user equipment (UE) or may communicate with the others as a base station (radio access network).

### <1-1. Overall Image of V2X Communication>

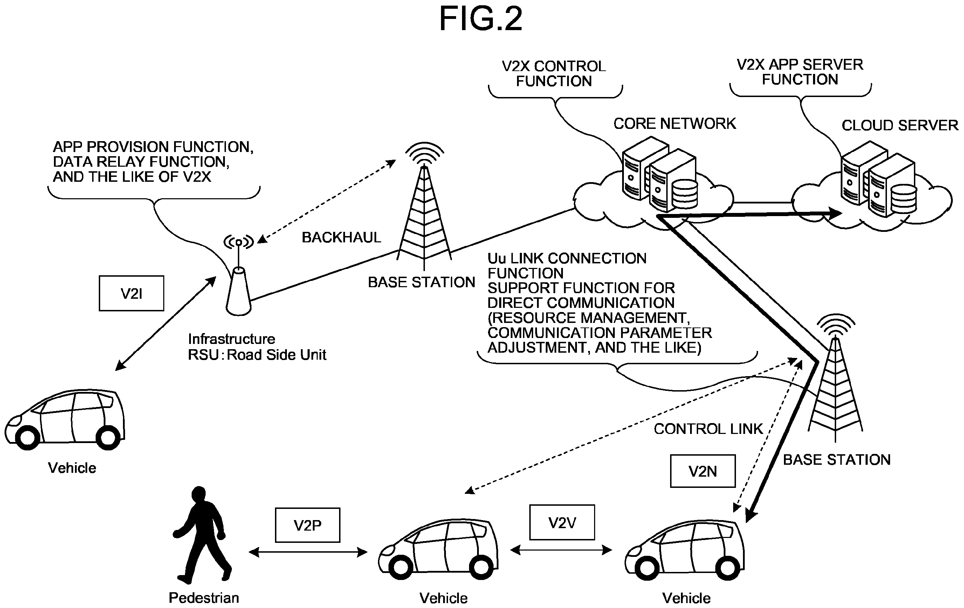

FIG. 2 is a diagram illustrating an example of an overall image of the V2X communication. In the example of FIG. 2, a cloud server has an application server (APP server) function of V2X. The cloud server is connected to a core network via a network such as the Internet. The core network includes a device having a control function of the V2X communication. A plurality of base stations are connected to the core network. A base station (RAN) has a function (for example, an Uu link connection function using an Uu interface) of performing radio communication with a terminal device (example of an UE, a vehicle in the example of FIG. 2).

Furthermore, the base station has a function of supporting direct communication (for example, sidelink communication) such as V2V communication and V2P communication. Note that, a road side unit (RSU) is disposed as an infrastructure on a road. As the RSU, two RSUs are conceivable such as a base station type RSU and an UE type RSU. The RSU includes, for example, an APP provision function, a data relay function, and the like of V2X.

### <1-2. V2X Use Case>

As radio communication for automobiles, development of dedicated short range communication (DSRC) in 802. 11p has been mainly performed so far. However, in recent years, standardization of "LTE-based V2X" which is long term evolution (LTE)-based in-vehicle communication has been performed. In LTE-based V2X communication, exchange of basic safety messages and the like is supported. In recent years, with an aim of further improving V2X communication, NR V2X communication using a 5G technology (New Radio (NR)) has been studied.

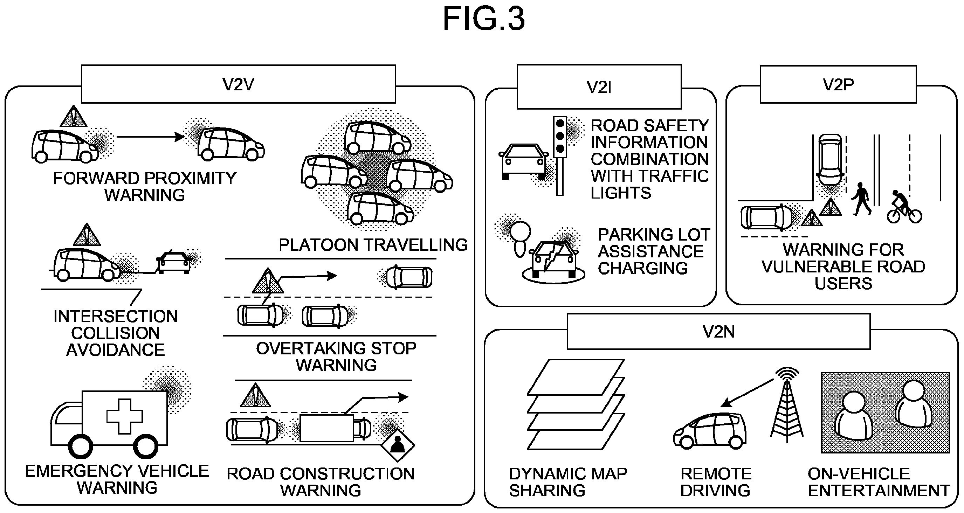

FIG. 3 is a diagram illustrating an example of a use case of the V2X communication. Examples of a use case of the V2V communication include a forward proximity warning, intersection collision avoidance, an emergency vehicle warning, platoon travelling, an overtaking stop warning, and a road construction warning. Furthermore, examples of a use case of V2I communication include notification of road safety information, a combination with traffic lights, parking lot assistance, charging, and the like. Furthermore, examples of a use case of V2P communication include a warning for vulnerable road users, and the like. Furthermore, examples of a use case of V2N communication include dynamic link sharing, remote driving, and on-vehicle entertainment.

The NR V2X communication supports a new use case that requires high reliability, low latency, high speed communication, and a high capacity, which cannot be supported by the LTE-based V2X. In the example of FIG. 3, for example, provision of a dynamic map, remote driving, and the like are exemplified. In addition, sensor data sharing in which sensor data is exchanged between vehicles or between a road and a vehicle, and a platooning use case for platoon travelling are exemplified. Use cases and requirements of the NR V2X communication are described in 3GPP TR 22.886 and the like. Some use cases will be briefly described in the following (1) to (4).

### (1) Vehicles Platoonning

An example of a use case of the NR V2X communication includes platoon travelling. The platoon travelling means that a plurality of vehicles travels in the same direction in a platoon. Information for controlling the platoon travelling is exchanged between a vehicle leading the platoon travelling and the other vehicles. The NR V2X communication is used to exchange this information. By exchanging the information by using the NR V2X communication, it is possible to further reduce an inter-vehicle distance in the platoon travelling.

### (2) Extended Sensors

An example of a use case of the NR V2X communication includes exchange of sensor-related information (raw data before data processing or processed data). The sensor information includes, for example, sensing results obtained by local sensors mounted on surrounding vehicles and the RSU, live video images, and the like. The vehicle acquires the sensor information via surrounding vehicles, the RSU, the pedestrian, a V2X application server, and the like.

By acquiring these sensor information, the vehicle can acquire information that cannot be obtained from its own sensor information, and can recognize a wider range of environment. In this use case, a lot of information need to be exchanged, and thus a high data rate is required for communication.

### (3) Advanced Driving

An example of a use case of the NR V2X communication includes semi-automatic travelling and fully automatic traveling. For example, the RSU shares recognition information obtained from a sensor or the like owned by the RSU with the surrounding vehicles. Accordingly, each vehicle can perform adjustment while synchronizing and cooperating a trajectory and an operation of the vehicle with each other. By using the NR V2X communication, each vehicle can also share an object and intention of the driving with the surrounding vehicles.

### (4) Remote Driving

An example of a use case of the NR V2X communication includes a remote operation by a remote operator or a V2X application. The remote operation is used, for example, for a person who cannot drive or a dangerous region. Alternatively, the remote operation is also applicable to a public transportation in which a route or a traveling road is determined to some extent. In this case, it is also possible to use cloud computing based operation as the remote operation for the public transportation. In this use case, high reliability and a low transmission latency are required for communication.

Note that, the use case described above is merely an example. The use case of the V2X communication of the present embodiment may be other use cases.

### <1-3. Physical Layer Enhancement>

In order to satisfy the above requirements, further enhancement of a physical layer is required for the LTE V2X. Examples of target links include a Uu link which is a link between the infrastructure such as the base station or the RSU and the terminal, and a PC5 link (sidelink) which is a link between the terminals. The following (1) to (9) are examples of a main enhancement.
(1) Channel Format
(2) Sidelink Feedback Communication
(3) Sidelink Resource Allocation Method
(4) Vehicle Position Information Estimation Technique
(5) Relay Communication Between Terminals
(6) Support For Unicast Communication and Multicast Communication
(7) Multicarrier Communication, Carrier Aggregation
(8) MIMO/Beamforming
(9) Support For High Frequency (For Example, 6 GHz or Higher)

Note that, examples of the enhancement of the channel format of (1) include a flexible numerology, a short transmission time interval (TTI), a multi-antenna support, a waveform, and the like. Furthermore, examples of the enhancement of the sidelink feedback communication of (2) include a HARQ, channel status information (CSI), and the like.

### <1-4. V2X Operation Scenario>

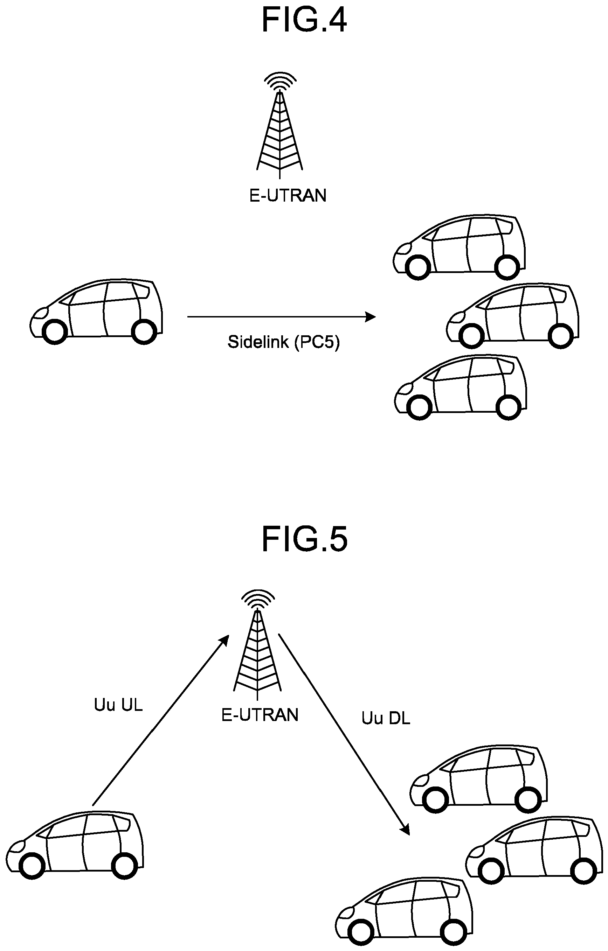

Next, an example of a communication operation scenario of V2X will be described with reference to FIGS. 4 to 9. In the V2N communication, communication between the base station and the terminal is simple only in DL/UL communication, but various communication paths are conceivable in the V2V communication. In the following description, each scenario will be described using an example of the V2V communication, but a similar communication operation can be applied to V2P and V2I. In this case, a communication destination is not a vehicle but a pedestrian, a base station, or an RSU.

### (1) Scenario 1

FIG. 4 is an example of the V2V communication according to Scenario 1. In Scenario 1, a vehicle (example of an UE) and a vehicle (example of an UE) directly communicate with each other by using the sidelink communication. The sidelink is a communication link between the terminals, such as PC5. The sidelink may be referred to as a V2V communication link, a V2P communication link, a V2I communication link, or the like in addition to the PC5. In the example of FIG. 4, the vehicle and the vehicle directly communicate with each other by using the sidelink communication without using a radio access network. Note that, in the example of FIG. 4, Evolved Universal Terrestrial Radio Access Network (E-UTRAN) is illustrated as the radio access network, but the radio access network is not limited to E-UTRAN. For example, the radio access network may be NG-RAN.

### (2) Scenario 2

FIG. 5 is an example of the V2V communication according to Scenario 2. In Scenario 2, a vehicle (example of an UE) and a vehicle communicate with each other via the radio access network. In the example of FIG. 5, data is transmitted from one vehicle to a plurality of vehicles. Note that, in FIG. 5, Uu indicates a Uu interface. The Uu interface is a radio interface between the terminal and the base station. UL indicates uplink and DL indicates downlink. In the example of FIG. 5, the E-UTRAN is illustrated as the radio access network, but the radio access network is not limited to the E-UTRAN. For example, the radio access network may be NG-RAN.

### (3) Scenario 3

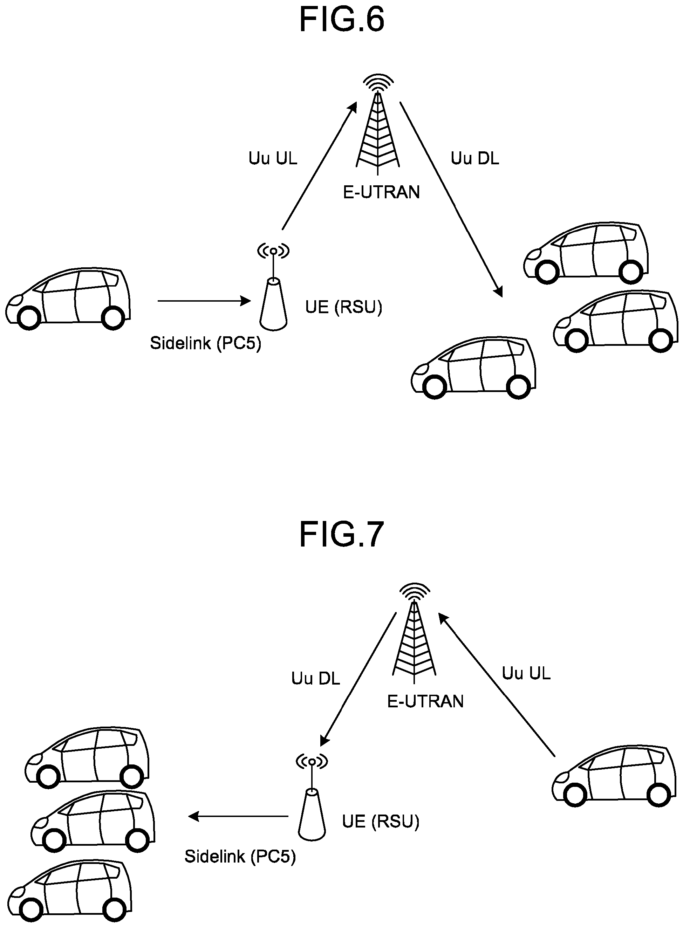

FIG. 6 is an example of the V2V communication according to Scenario 3. In Scenario 3, the vehicle and the vehicle communicate with each other via the RSU and the radio access network. In the example of FIG. 6, data is transmitted from one vehicle to a plurality of vehicles. In the example of FIG. 6, one vehicle and the RSU are connected by the sidelink communication. In the example of FIG. 6, the E-UTRAN is illustrated as the radio access network, but the radio access network is not limited to the E-UTRAN. For example, the radio access network may be NG-RAN. Furthermore, in FIG. 6, the RSU is illustrated as a device that operates as the UE, but is not limited thereto. For example, the RSU may operate as RAN, or may operate as a part of the RAN (E-UTRAN or NG-RAN) (for example, a gNB-DU, an RRH, an RRU) of FIG. 6.

### (4) Scenario 4

FIG. 7 is an example of the V2V communication according to Scenario 4. In Scenario 4, the vehicle and the vehicle communicate with each other via the RSU and the radio access network. In the example of FIG. 7, a plurality of vehicles and the RSU are connected by the sidelink communication. In the example of FIG. 7, the E-UTRAN is illustrated as the radio access network, but the radio access network is not limited to the E-UTRAN. For example, the radio access network may be NG-RAN. Furthermore, in FIG. 7, the RSU is illustrated as a device that operates as the UE, but is not limited thereto. For example, the RSU may operate as RAN, or may operate as a part of the RAN (E-UTRAN or NG-RAN) (for example, a gNB-DU, an RRH, an RRU) of FIG. 7.

### (5) Scenario 5

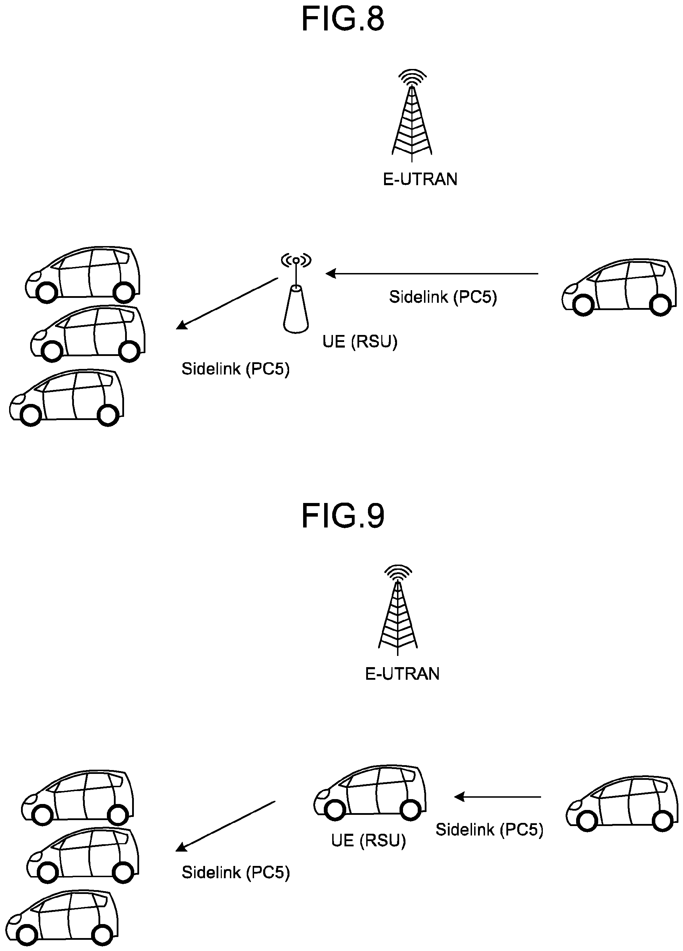

FIG. 8 is an example of the V2V communication according to Scenario 5. In Scenario 5, the vehicle and the vehicle communicate with each other via the RSU without the radio access network. The RSU illustrated in FIG. 8 is a fixed station type RSU. In the example of FIG. 8, the E-UTRAN is illustrated as the radio access network, and the radio access network may be, for example, NG-RAN. Furthermore, in FIG. 8, the RSU is illustrated as a device that operates as the UE, but is not limited thereto. For example, the RSU may operate as RAN, or may operate as a part of the RAN (E-UTRAN or NG-RAN) (for example, a gNB-DU, an RRH, an RRU) of FIG. 8.

### (6) Scenario 6

FIG. 9 is an example of the V2V communication according to Scenario 6. In Scenario 6, the vehicle and the vehicle communicate with each other via the RSU without the radio access network. The RSU illustrated in FIG. 9 is a mobile station type RSU. In the example of FIG. 9, the E-UTRAN is illustrated as the radio access network, and the radio access network may be, for example, NG-RAN. Furthermore, in FIG. 9, the RSU is illustrated as a device that operates as the UE, but is not limited thereto. For example, the RSU may operate as RAN, or may operate as a part of the RAN (E-UTRAN or NG-RAN) (for example, a gNB-DU, an RRH, an RRU) of FIG. 9.

### <2. First Embodiment>

### <2-1. Overview of First Embodiment>

The broadcast communication has been supported in the V2X communication (for example, the V2X communication of 3GPP Rel. 12 or later) of the related art and D2D communication. On the other hand, in the NR V2X communication, for example, in a case where the V2X communication is performed in Scenarios 1 to 6 described above, it is necessary to perform the unicast communication or the groupcast (multicast) communication in addition to the broadcast communication, and it is concerned that a traffic amount is increased, and communication quality is deteriorated.

In other words, in the NR V2X communication, for example, in the sidelink communication between one vehicle (an example of the UE) and one vehicle, it is required to support high quality communication such as ultra-reliable low latency communication (URLLC) communication. However, when the number of the vehicles that perform such sidelink communication increases and the traffic amount is increased, there is a possibility that quality of the sidelink communication is deteriorated and requirement of ultra-latency cannot be satisfied.

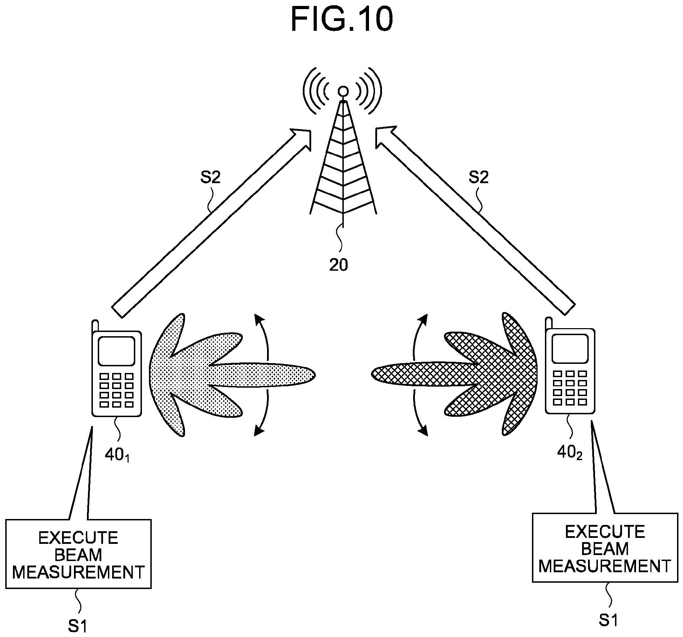

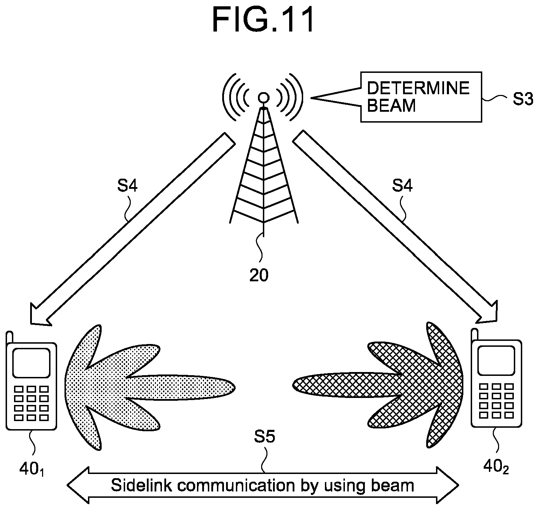

Therefore, in the first embodiment of the present disclosure, quality of the sidelink communication is improved by applying a beamforming technology to V2X or D2D sidelink communication. This feature will be described with reference to FIGS. 10 and 11. FIGS. 10 and 11 are diagrams illustrating an overview of the sidelink communication according to the first embodiment of the present disclosure.

As illustrated in FIG. 10, an information processing system includes a base station 20 and terminal devices 40₁ and 40₂ that perform the sidelink communication. In the first embodiment of the present disclosure, the base station 20 manages a beam in the sidelink communication of the terminal device 40.

Specifically, as illustrated in FIG. 10, the terminal device 40 executes beam measurement, for example, by measuring RS received power (RSRP) of a reference signal (RS) while sweeping the beam (Step S1). The terminal device 40 notifies the base station 20 of a result of the beam measurement (Step S2). Note that, the terminal device 40 may measure an RS strength indicator (RSSI) or an RS received quality (RSRQ) instead of the RSRP.

Next, as illustrated in FIG. 11, the base station 20 determines a beam to be used for sidelink communication of the terminal device 40 based on the measurement result of the terminal device 40 (Step S3). The base station 20 notifies the terminal device 40 of information regarding the determined beam (hereinafter, also referred to as beam information) (Step S4). The terminal device 40 generates a beam based on the beam information acquired from the base station 20, and performs the sidelink communication by using the generated beam (Step S5).

Accordingly, in the information processing system according to the first embodiment of the present disclosure, the terminal device 40 can perform the sidelink communication by using the beamforming technology. Accordingly, the quality of the sidelink communication can be improved. Furthermore, the base station 20 can determine a beam of the terminal device 40 by determining the beam to be used for the sidelink communication of the terminal device 40, for example, in consideration of communication of another terminal device (not illustrated). Accordingly, the quality of the sidelink communication of the terminal device 40 can be improved.

Note that, the D2D communication with the terminal device 40 is illustrated as the sidelink communication in FIGS. 10 and 11, but communication using the beamforming technology can be similarly performed in V2X sidelink communication.

### <2-2. Configuration of Information Processing System>

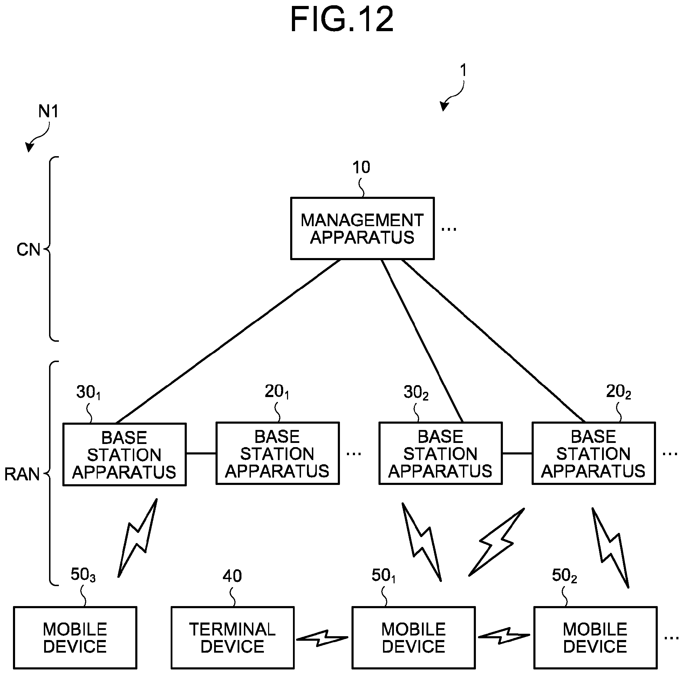

First, an information processing system 1 according to the first embodiment of the present disclosure will be described with reference to FIG. 12. FIG. 12 is a diagram illustrating a configuration example of the information processing system 1 according to the first embodiment of the present disclosure. The information processing system 1 illustrated in FIG. 12 is a mobile communication system including a plurality of communication devices (mobile devices and terminal devices) capable of sidelink communication.

The information processing system 1 is, for example, a radio communication system using a radio access technology (RAT) of New Radio (NR). This radio communication system is also called a 5th generation system (5GS). Note that, the information processing system 1 is not limited to a mobile phone communication system, and may be, for example, an intelligent transport system (ITS). Furthermore, the information processing system 1 is not limited to the cellular communication system, and may be, for example, another radio communication system such as a wireless local area network (LAN) system, an aeronautical radio communication system, or a space radio communication system.

The information processing system 1 may provide a function of executing application processing (for example, an edge function) to the mobile device via the radio network using an NR radio access technology. The NR is a type of cellular communication technology, and enables mobile communication of the mobile device by disposing a plurality of areas covered by the base station apparatus cellularly.

Note that, in the following description, the NR includes a new radio access technology (NRAT) and Further EUTRA (FEUTRA). Note that, a single base station may manage a plurality of cells. A cell corresponding to the NR may be referred to as an NR cell.

The NR is a next generation (fifth generation) radio access technology (RAT) of LTE (fourth generation communication including LTE-Advanced and LTE-Advanced Pro). The NR is a radio access technology that can correspond to various use cases including enhanced mobile broadband (eMBB), massive machine type communications (mMTC), and ultra-reliable and low latency communications (URLLC). The NR has been studied aiming at a technical framework corresponding to usage scenarios, requirements, arrangement scenarios, and the like in these use cases.

Note that, the base station of the NR may be referred to as a next generation RAN (NGRAN) node. NGRAN refers to RAN (RAN having a reference point with 5GC) in a case where a core network is 5G Core (5GC). That is, the NGRAN may include a gNodeB (gNB) and an ng-eNodeB (ng-eNB). Furthermore, in the NR, the mobile device may be referred to as a user equipment (UE).

### [Overall Configuration of Information Processing System]

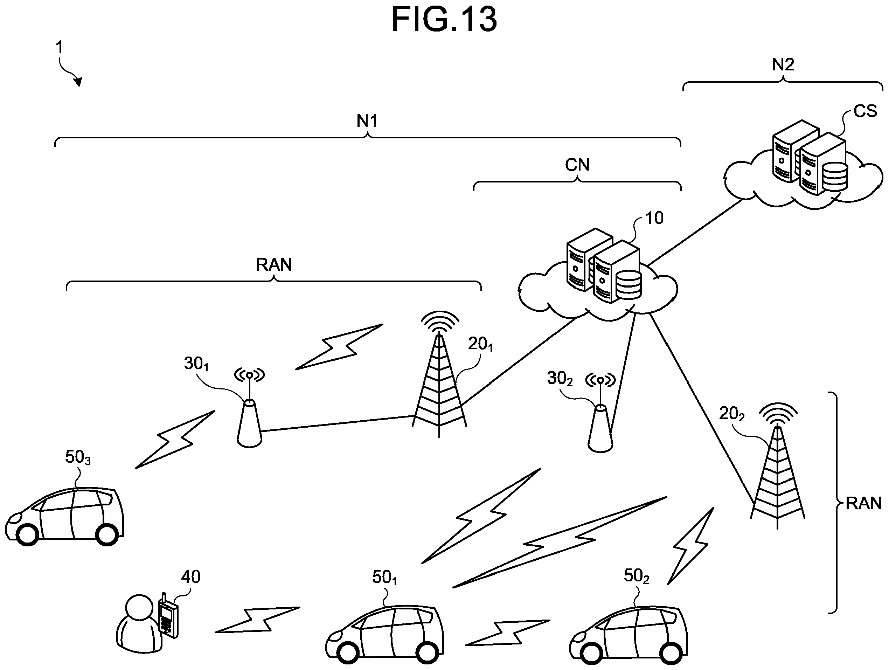

As illustrated in FIG. 12, the information processing system 1 includes a management apparatus 10, a base station apparatus 20, a base station apparatus 30, the terminal device 40, and a mobile device 50. Furthermore, FIG. 13 is a diagram illustrating a specific configuration example of the information processing system 1. The information processing system 1 may include a cloud server apparatus CS in addition to the configuration described above, but it may not be an essential constituent element.

A plurality of the devices constituting the information processing system 1 constitute a network N1. The network N1 is, for example, a radio network. For example, the network N1 is a mobile communication network constituted by using the radio access technology such as the NR. The network N1 includes a radio access network RAN and a core network CN.

Note that, the devices in the drawing may be considered as a logical node in a logical sense. That is, some of the devices in the drawing may be realized by a virtual machine (VM), a container (Container), a docker (Docker), or the like, and they may be installed on physically the same hardware.

### [Cloud Server Apparatus]

The cloud server apparatus CS (see FIG. 13) is a processing apparatus (for example, a server apparatus) connected to a network N2. For example, the cloud server apparatus CS is a server host computer that processes a request from a client computer (for example, the mobile device 50). The cloud server apparatus CS may be a PC server, a midrange server, or a mainframe server.

Here, the network N2 is a communication network connected to the network N1 via a gateway device (for example, UPF, S-GW, or P-GW). That is, the network N2 is a data network (DN). Furthermore, for example, the network N2 is a communication network such as the Internet, a local internet protocol (IP) network, or a telephone network (for example, a fixed telephone network or a mobile phone network). Note that, the cloud server apparatus can be rephrased as the server apparatus, the processing apparatus, or an information processing apparatus.

### [Management Apparatus]

The management apparatus 10 (See FIGS. 12 and 13) is an apparatus that manages the radio network. For example, the management apparatus 10 is an apparatus that functions as an access and mobility management function (AMF). The management apparatus 10 constitutes a part of the core network CN together with the gateway device. The core network CN is a network of a predetermined entity such as a mobile communication carrier. For example, the core network CN is a 5G core network (5GC). Note that, the predetermined entity may be the same as or different from an entity that uses, operates, and/or manages the base station apparatuses 20 and 30.

Note that, the management apparatus 10 may have a function of a gateway. For example, when the core network is 5GC, the management apparatus 10 has a function as a user plane function (UPF). Furthermore, the management apparatus 10 may be an SMF, a PCF, a UDM, or the like. Furthermore, or alternatively, the core network CN may include the SMF, the PCF, the UDM, and the like.

The management apparatus 10 is connected to each of a plurality of the base station apparatuses 20 and each of a plurality of the base station apparatuses 30. For example, in the case of 5GS, an N2 reference point exists between AMF (10) and NG-RAN (20, 30), and the AMF (10) and the NG-RAN (20, 30) are logically connected to each other via an NG interface.

The management apparatus 10 may manage communication between the base station apparatus 20 and the base station apparatus 30. For example, the management apparatus 10 manages a position of each of the mobile devices 50 in the network N1 for each mobile device 50 in units of areas (for example, Tracking Area, RAN Notification Area) formed of a plurality of cells. Note that, the management apparatus 10 may grasp and manage, for each mobile device 50, which base station apparatus (or which cell) the mobile device 50 is connected to, in a communication area of which base station apparatus (or which cell) the mobile device 50 exists, and the like in units of cells.

A cell provided by the base station is referred to as a serving cell. The serving cell includes a primary cell (PCell) and a secondary cell (SCell). In a case where Dual Connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), NR-NR Dual Connectivity) is provided to the UE (for example, the terminal device 40 and the mobile device 50), the PCell and the SCell(s) provided by a Master Node (MN) are referred to as a master cell group. Moreover, the serving cell may include a primary secondary cell (PSCell) or a primary SCG cell. That is, in a case where the Dual Connectivity is provided to the UE, the PSCell and the SCell(s) provided by a secondary node (SN) are referred to as a secondary cell group (SCG).

One downlink component carrier and one uplink component carrier may correspond to one cell. Furthermore, a system bandwidth corresponding to one cell may be divided into a plurality of bandwidth parts. In this case, one or more bandwidth parts may be configured for the UE, and one bandwidth part may be used as an active BWP for the UE. Furthermore, radio resources (for example, a frequency band, a numerology (subcarrier spacing), and slot configuration) that can be used by the mobile device 50 may be different for each cell, each component carrier or each BWP.

### [Base Station Apparatus]

The base station apparatus 20 (See FIGS. 12 and 13) is a radio communication apparatus that performs radio communication with the terminal device 40 and the mobile device 50. The base station apparatus 20 is an apparatus constituting a network in the V2N communication. The base station apparatus 20 is a type of communication apparatus.

As described above, the base station apparatus 20 may be an apparatus corresponding to a radio base station (base station, a Node B, an eNB, a gNB, and the like) or a radio access point (Access Point). Moreover or alternatively, in a case where the base station apparatus is the eNB, the gNB, or the like, the base station apparatus may be referred to as a 3GPP access. Moreover or alternatively, in a case where the base station apparatus is a radio access point (Access Point), the base station apparatus may be referred to as a non-3GPP access. Moreover or alternatively, the base station apparatus 20 may be a radio relay station (Relay Node). Moreover or alternatively, the base station apparatus 20 may be an optical feeding apparatus called a remote radio head (RRH). Moreover or alternatively, in a case where the base station apparatus is the gNB, the base station apparatus may be referred to as a combination of a gNB central unit (CU) and a gNB distributed unit (DU) or any one of them.

The gNB central unit (CU) hosts a plurality of upper layers (for example, an RRC, a SDAP, and a PDCP) of an access stratum for communication with the UE. On the other hand, the gNB-DU hosts a plurality of lower layers (for example, RLC, MAC, PHY) of the access stratum. That is, among message/information to be described later, RRC signalling may be generated by the gNB CU, and DCI may be generated by the gNB-DU.

In the present embodiment, the base station of the radio communication system may be referred to as the base station apparatus. The base station apparatus 20 may be configured to be capable of performing radio communication with another base station apparatus 20 and the base station apparatus 30. For example, in a case where a plurality of the base station apparatuses 20 and 30 are formed by a combination of eNBs or a combination of the eNB and the gNB, the apparatuses may be connected by an X2 interface.

Moreover or alternatively, in a case where a plurality of the base station apparatuses 20 and 30 are formed by a combination of gNBs or a combination of the eNB and the gNB, the apparatuses may be connected by an Xn interface. Moreover or alternatively, in a case where a plurality of the base station apparatuses 20 and 30 are formed by a combination of the gNB central unit (CU) and the gNB distributed unit (DU), the base station apparatuses may be connected by an F1 interface. Message/information (information of RRC signalling or DCI) to be described later may be communicated (for example, via the X2 interface, the Xn interface, and the F1 interface) between a plurality of the base station apparatuses 20 and 30.

Note that, the radio access technology used by the base station apparatus 20 may be a cellular communication technology or a radio LAN technology. The radio access technology used by the base station apparatus 20 is not limited thereto, and may be another radio access technology. Furthermore, the radio communication used by the base station apparatus 20 may be radio communication using radio waves or radio communication (optical radio communication) using infrared ray or visible light.

The base station apparatus 30 (see FIGS. 12 and 13) is a radio communication apparatus that performs radio communication with the terminal device 40 and the mobile device 50. The base station apparatus 30 is an apparatus constituting an infrastructure in the V2I communication.

Similarly to the base station apparatus 20, the base station apparatus 30 is a type of communication apparatus. The base station apparatus 30 is, for example, an apparatus corresponding to a radio base station (base station, a Node B, an eNB, a gNB, and the like) or a radio access point (Access Point).

The base station apparatus 30 may be a radio relay station. The base station apparatus 30 may be a road-side base station apparatus such as a road side unit (RSU). Furthermore, the base station apparatus 20 may be an optical feeding apparatus called a remote radio head (RRH). The base station apparatus 30 may be configured to be capable of performing radio communication with another base station apparatus 30 and the base station apparatus 20.

Note that, the radio access technology used by the base station apparatus 30 may be a cellular communication technology or a radio LAN technology. The radio access technology used by the base station apparatus 20 is not limited thereto, and may be another radio access technology. Furthermore, the radio communication used by the base station apparatus 30 may be radio communication using radio waves or radio communication (optical radio communication) using infrared ray or visible light.

Note that, the base station apparatuses 20 and 30 may be capable of communicating with each other via a base station apparatus-core network interface (for example, an NG interface, an S1 interface, and the like). This interface may be wired or wireless. Furthermore, the base station apparatus may be capable of communicating with each other via an interface between the base station apparatuses (for example, an Xn interface, an X2 interface, and the like). This interface may be wired or wireless.

The base station apparatuses 20 and 30 may be used, operated, and/or managed by various entities. For example, a mobile network operator (MNO), a mobile virtual network operator (MVNO), a mobile virtual network enabler (MVNE), a neutral host network (NHN) operator, an enterprise, an educational institution (educational institutions, education boards of local governments, and the like), a real estate (building, an apartment, and the like) administrator, an individual, and the like can be assumed as the entity.

The entity using, operating, and/or managing the base station apparatuses 20 and 30 is not limited thereto. The base station apparatuses 20 and 30 may be installed and/or operated by one operator or may be installed and/or operated by one individual.

The entity installing and operating the base station apparatus 20 is not limited thereto. For example, the base station apparatuses 20 and 30 may be installed and operated jointly by a plurality of operators or a plurality of individuals. Furthermore, the base station apparatuses 20 and 30 may be a shared facility used by a plurality of the operators or a plurality of the individuals. In this case, the facility may be installed and/or operated by a third party different from a user.

Note that, a concept of the base station apparatus includes not only a donor base station but also a relay base station (also referred to as a relay station or a relay station apparatus). Furthermore, a concept of the base station includes not only a structure having a function of the base station but also an apparatus installed in the structure. The structure is, for example, a building such as a multistory building, a house, a steel tower, a station facility, an airport facility, a harbor facility, or a stadium. Note that, a concept of the structure includes not only the building but also a non-building structure such as a tunnel, a bridge, a dam, a wall, or a steel column, and a facility such as a crane, a gate, or a windmill. Furthermore, the concept of the structure includes not only a structure on land (on a ground in a narrow sense) or an underground structure, but also an on-water structure such as a pier or a megafloat, and an underwater structure such as a marine observation facility. The base station apparatus can be rephrased as the processing apparatus, or the information processing apparatus.

The base station apparatuses 20 and 30 may be fixed stations or base station apparatuses (mobile stations) configured to be movable. For example, the base station apparatuses 20 and 30 may be apparatuses installed in a mobile body or may be mobile bodies themselves. For example, relay station apparatuses having mobility can be regarded as the base station apparatuses 20 and 30 as the mobile stations. Furthermore, an apparatus originally having mobility, such as a vehicle, a drone (aerial vehicle), or a smartphone, and having a function of a base station apparatus (at least a part of the function of the base station apparatus) also corresponds to the base station apparatuses 20 and 30 as a mobile station.

Here, the mobile body may be a mobile terminal such as a smartphone or a mobile phone. Furthermore, the mobile body may be a mobile body that moves on land (on the ground in a narrow sense) (for example, a vehicle such as an automobile, a bicycle, a bus, a truck, a motorcycle, a train, or a linear motor car) or a mobile body that moves underground (for example, in a tunnel) (for example, a subway). Furthermore, the mobile body may be a mobile body that moves on water (for example, a ship such as a passenger ship, a cargo ship, or a hovercraft) or a mobile body that moves underwater (for example, a submersible ship such as a submersible vessel, a submarine, or an unmanned diving machine). Furthermore, the mobile body may be a mobile body that moves in the atmosphere (for example, an aerial vehicle such as an airplane, an airship, and a drone) or a mobile body that moves outside the atmosphere (for example, an artificial celestial body such as an artificial satellite, a spacecraft, a space station, or a probe).

Furthermore, the base station apparatuses 20 and 30 may be ground base station apparatuses (ground station apparatuses) installed on the ground. For example, the base station apparatuses 20 and 30 may be base station apparatuses disposed in a structure on the ground, or may be base station apparatuses installed in the mobile body moving on the ground. More specifically, the base station apparatuses 20 and 30 may be antennas installed in the structure such as the building and a signal processing apparatuses connected to the antennas. The base station apparatuses 20 and 30 may be structures or mobile bodies themselves. The "ground" is a ground in a broad sense including not only land (ground in a narrow sense) but also underground, on water, and underwater. Note that, the base station apparatuses 20 and 30 are not limited to ground base station apparatuses. The base station apparatuses 20 and 30 may be non-ground base station apparatuses (non-ground station apparatuses) capable of floating in the air or in space. For example, the base station apparatuses 20 and 30 may be aircraft station apparatuses or satellite station apparatuses.

An aircraft station apparatus is a radio communication apparatus capable of floating in the atmosphere (including the stratosphere), such as the aircraft. The aircraft station apparatus may be an apparatus installed in the aircraft or the like, or may be the aircraft itself. Note that, a concept of the aircraft includes not only a heavy aircraft such as an airplane and a glider but also a light aircraft such as a balloon and an airship. Furthermore, the concept of the aircraft includes not only the heavy aircraft and the light aircraft but also a rotary wing aircraft such as a helicopter and an autogyro. Note that, the aircraft station apparatus (or the aircraft on which the aircraft station apparatus is installed) may be an unmanned aircraft such as a drone. Note that, a concept of the unmanned aircraft also includes an unmanned aircraft system (UAS) and a tethered UAS. Furthermore, the concept of the unmanned aircraft includes a lighter than Air UAS (LTA) and a heavier than Air UAS (HTA). Other concepts of the unmanned aircraft also include high altitude UAS Platforms (HAPs).

The satellite station apparatus is a radio communication apparatus capable of floating outside the atmosphere. The satellite station apparatus may be an apparatus installed in a space navigational body such as the artificial satellite or may be the space navigational body itself. A satellite serving as the satellite station apparatus may be any of a low earth orbiting (LEO) satellite, a medium earth orbiting (MEO) satellite, a geostationary earth orbiting (GEO) satellite, and a highly elliptical orbiting (HEO) satellite. The satellite station apparatus may be an apparatus installed in the low earth orbiting satellite, the middle earth orbiting satellite, the geostationary earth orbiting satellite, or the high elliptical orbiting satellite.

Coverage of the base station apparatuses 20 and 30 may have a large magnitude like a macro cell, or a small magnitude like a pico cell. The coverage of the base station apparatuses 20 and 30 may have an extremely small magnitude equal to that of a femtocell. Furthermore, the base station apparatuses 20 and 30 may have beamforming capability. In this case, the base station apparatuses 20 and 30 may form a cell or a service area for each beam.

### [Terminal Device and Mobile Device]

The terminal device 40 is a radio communication device that performs radio communication with the base station apparatus 20 or the base station apparatus 30. The terminal device 40 is, for example, a mobile phone, a smart device (smartphone or a tablet computer), a personal digital assistant (PDA), or a personal computer. The mobile device 50 may be a machine to machine (M2M) device or an Internet of Things (IoT) device (for example, it may be referred to as MTC UE, NB-IoT UE, or Cat M UE).

The terminal device 40 can perform sidelink communication with the mobile device 50 and another terminal device 40. Note that, the radio communication (including the sidelink communication) used by the terminal device 40 may be radio communication using radio waves or radio communication (optical radio communication) using infrared ray or visible light.

The mobile device 50 is a movable radio communication device that performs radio communication with the base station apparatus 20 or the base station apparatus 20. The mobile device 50 may be a radio communication device installed in the mobile body or may be the mobile body itself. For example, the mobile device 50 may be a vehicle that moves on a road, such as an automobile, a bus, a truck, or a motorcycle, or a radio communication device installed in the vehicle.

The mobile device 50 can perform sidelink communication with the terminal device 40 and another mobile device 50. The mobile device 50 can use an automatic retransmission technology such as HARQ when performing the sidelink communication. Note that, the radio communication (including the sidelink communication) used by the mobile device 50 may be radio communication using radio waves or radio communication (optical radio communication) using infrared ray or visible light.

Note that, the "mobile device" is a type of communication device, and is also referred to as a mobile station, a mobile station device, a terminal device, or a terminal. A concept of the "mobile device" includes not only a communication device configured to be movable but also a mobile body in which the communication device is installed. At this time, the mobile body may be a mobile terminal, or may be a mobile body that moves on land (on the ground in a narrow sense), underground, on water, or underwater. Furthermore, the mobile body may be a mobile body that moves inside the atmosphere, such as a drone (aerial UE) or a helicopter, or may be a mobile body that moves outside the atmosphere, such as an artificial satellite.

In the present embodiment, a concept of the communication device includes not only a portable mobile device (terminal device) such as a portable terminal but also a device installed in the structure or the mobile body. The structure or the mobile body itself may be regarded as a communication device. Furthermore, the concept of the communication device includes not only the mobile device (terminal device, an automobile, and the like) but also the base station apparatus (donor base station, relay base station, and the like). The communication device is a type of processing device and information processing device.

The mobile device 50, the terminal device 40, and the base station apparatuses 20 and 30 are connected to each other by radio communication (for example, radio waves or optical radio communication). In a case where the mobile device 50 moves from a communication area (or cell) of a certain base station apparatus to a communication area (or cell) of another base station apparatus, handover (or handoff) or cell selection (reselection) is performed.

The mobile device 50 and the terminal device 40 may be simultaneously connected to a plurality of the base station apparatuses or a plurality of the cells to perform the communication. For example, in a case where one base station apparatus can provide a plurality of the cells, the mobile device 50 or the terminal device 40 can execute carrier aggregation by using one cell as the PCell and using another cell as the SCell.

Moreover, or alternatively, in a case where each of a plurality of the base station apparatuses can provide one or a plurality of cells, the mobile device 50 or the terminal device 40 can execute DC by using one or a plurality of cells managed by one base station apparatus (MN (for example, MeNB or MgNB)) as the PCell or the PCell and SCell(s), and using one or a plurality of cells managed by the other base station apparatus (SN (for example, SeNB or SgNB)) as the PSCell or the PSCell and SCell(s). Note that, the DC may be referred to as multi connectivity (MC). Alternatively, the mobile device 50 and the terminal device 40 can communicate with a plurality of the base station apparatuses by using a coordinated multi-point transmission and reception (CoMP) technology via cells of different base station apparatuses (a plurality of cells having different cell identifiers or the same cell identifier).

Note that, the mobile device 50 and the terminal device 40 are not necessarily devices directly used by a person. The mobile device 50 and the terminal device 40 may be sensors installed in a machine or the like in a factory as in so-called Machine Type Communication (MTC). Furthermore, the mobile device 50 may be a machine to machine (M2M) device or an Internet of Things (IoT) device. Furthermore, the mobile device 50 and the terminal device 40 may be devices having a relay communication function as represented by Device to Device (D2D) and Vehicle to Everything (V2X). Furthermore, the mobile device 50 and the terminal device 40 may be devices called a client premises equipment (CPE) used in a wireless backhaul or the like.

Hereinafter, a configuration of each device constituting the information processing system 1 according to the first embodiment of the present disclosure will be specifically described.

### [Configuration of Management Apparatus]

The management apparatus 10 is an apparatus that manages the radio network. For example, the management apparatus 10 is an apparatus that manages communication between the base station apparatuses 20 and 30. When the core network CN is 5GC, the management apparatus 10 is an apparatus having a function as AMF or SMF, and UPF.

The management apparatus 10 has a function of executing application processing (for example, edge function), and may function as a server apparatus such as an application server. More specifically, in a case where the UPF is disposed in a local area network (that is, in a case where the UPF is a local UPF), the apparatus for edge computing may be disposed in DN having an N6 reference point between the DN and the UPF. The apparatus for edge computing may be included in the management apparatus 10. The apparatus for edge computing may operate as, for example, a multi access edge computing (MEC) platform, a MEC host, and a MEC application.

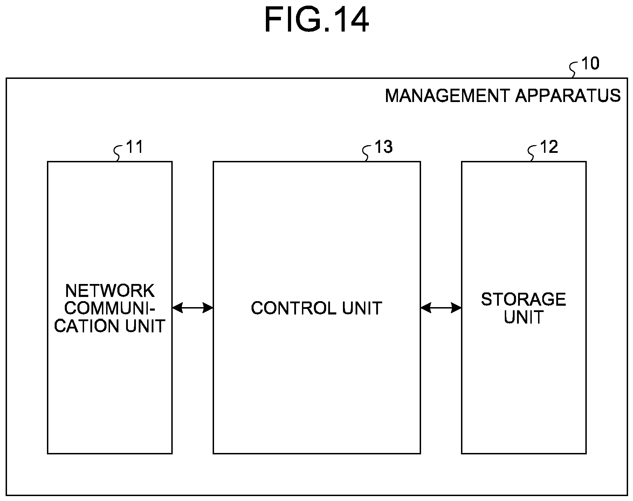

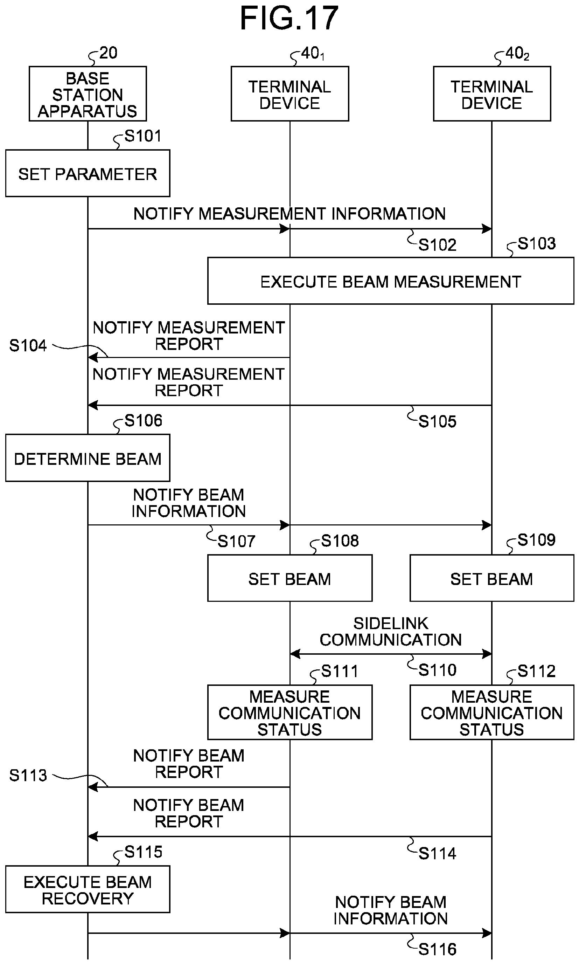

FIG. 14 is a diagram illustrating a configuration example of the management apparatus 10 according to the first embodiment of the present disclosure. The management apparatus 10 includes a network communication unit 11, a storage unit 12, and a control unit 13. Note that, the configuration illustrated in FIG. 17 is a functional configuration, and a hardware configuration may be different from the functional configuration. Furthermore, functions of the management apparatus 10 may be distributed as functions physically divided into a plurality of configurations to be implemented. For example, the management apparatus 10 may include a plurality of server apparatuses.

### (Network Communication Unit)

The network communication unit 11 is a communication interface for communicating with other devices. The network communication unit 11 may be a network interface or a device connection interface. The network communication unit 11 has a function of directly or indirectly connecting to the network N1.

For example, the network communication unit 11 may include a local area network (LAN) interface such as a network interface card (NIC), or may include a USB interface configured by a universal serial bus (USB) host controller, a USB port, or the like. Furthermore, the network communication unit 11 may be a wired interface or a wireless interface. The network communication unit 11 functions as communication means for the management apparatus 10. The network communication unit 11 communicates with the base station apparatuses 20 and 30 under control of the control unit 13.

### (Storage Unit)

The storage unit 12 is a storage device capable of reading and writing data, such as a dynamic random access memory (DRAM), a static random access memory (SRAM), a flash memory, or a hard disk. The storage unit 12 functions as storage means for the management apparatus 10. The storage unit 12 stores, for example, a connection state of the mobile device 50. For example, the storage unit 12 stores a radio resource control (RRC) state and an EPS connection management (ECM) state of the mobile device 50. The storage unit 12 may function as a home memory that stores position information of the mobile device 50.

### (Control Unit)

The control unit 13 is a controller that controls each unit of the management apparatus 10. The control unit 13 is realized by, for example, a processor such as a central processing unit (CPU) or a micro processing unit (MPU). For example, the control unit 13 is realized by the processor executing various programs stored in the storage device in the management apparatus 10 by using a random access memory (RAM) or the like as a work area. Note that, the control unit 13 may be realized by an integrated circuit such as an application specific integrated circuit (ASIC) or a field programmable gate array (FPGA). Any of the CPU, the MPU, the ASIC, and the FPGA can be regarded as a controller.

### [Configuration of Base Station Apparatus]

Next, a configuration of the base station apparatus 20 will be described. The base station apparatus 20 is a radio communication apparatus that performs radio communication with the mobile device 50 (or the terminal device 40), and is a communication control apparatus that controls sidelink communication between the mobile devices 50 (or the terminal devices 40). The base station apparatus 20 is, for example, an apparatus that functions as a radio base station, a radio relay station, a radio access point, or the like. At this time, the base station apparatus 20 may be an optical feeding apparatus such as an RRH. As described above, the base station apparatus 20 is an apparatus constituting a network in the V2N communication.

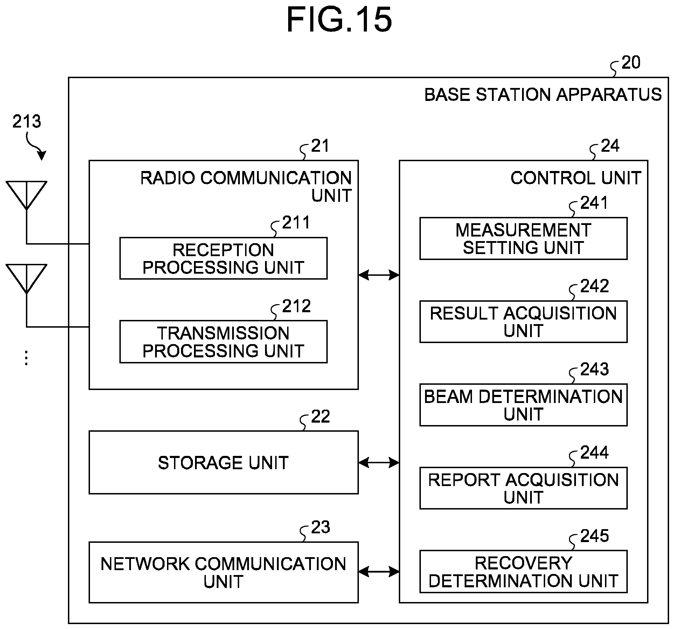

FIG. 15 is a diagram illustrating a configuration example of the base station apparatus 20 according to the first embodiment of the present disclosure. As illustrated in FIG. 15, the base station apparatus 20 includes a radio communication unit 21, a storage unit 22, a network communication unit 23, and a control unit 24. Note that, the configuration illustrated in FIG. 15 is a functional configuration, and a hardware configuration may be different from the functional configuration. Furthermore, functions of the base station apparatus 20 may be distributed as functions physically divided into a plurality of configurations to be implemented.

### (Radio Communication Unit)

The radio communication unit 21 is a radio communication interface that performs radio communication with other radio communication apparatuses and devices (for example, the mobile device 50, the terminal device 40, the base station apparatus 30, and another base station apparatus 20). The radio communication unit 21 operates under control of the control unit 24. Note that, the radio communication unit 21 may comply with a plurality of radio access schemes. For example, the radio communication unit 21 may be compatible with both NR and LTE. The radio communication unit 21 may be compatible with W-CDMA or cdma 2000 in addition to LTE. The radio communication unit 21 may comply with a radio access scheme other than NR, LTE, W-CDMA, and cdma 2000.

The radio communication unit 21 includes a reception processing unit 211, a transmission processing unit 212, and an antenna 213. The radio communication unit 21 may include the reception processing unit 211, the transmission processing unit 212, and the antenna 213, respectively in plural. Note that, in a case where the radio communication unit 21 complies with a plurality of the radio access schemes, each unit of the radio communication unit 21 can be configured separately for each radio access scheme. For example, the reception processing unit 211 and the transmission processing unit 212 may be separately configured in LTE and NR.

The reception processing unit 211 processes an uplink signal received via the antenna 213. For example, the reception processing unit 211 performs signal processing such as orthogonal demodulation, AD conversion, and composite processing on the uplink signal to generate uplink data and uplink control information. The reception processing unit 211 outputs the generated uplink data and uplink control information to the control unit 24.

The transmission processing unit 212 performs processing of transmitting downlink control information and downlink data. For example, the transmission processing unit 212 performs signal processing such as encoding processing, DA conversion, and orthogonal modulation on the downlink control information and the downlink data input from the control unit 24 to generate a downlink signal. The transmission processing unit 212 transmits the generated downlink signal from the antenna 213.

### (Storage Unit)

The storage unit 22 is a storage device capable of reading and writing data, such as a DRAM, an SRAM, a flash memory, or a hard disk. The storage unit 22 functions as storage means for the base station apparatus 20.

### (Network Communication Unit)

The network communication unit 23 is a communication interface for communicating with other apparatuses (for example, the management apparatus 10, another base station apparatus 20, the base station apparatus 30, the cloud server apparatus CS, and the like). The network communication unit 23 has a function of directly or indirectly connecting to the network N1. For example, the network communication unit 23 includes a LAN interface such as an NIC. Furthermore, the network communication unit 23 may be a wired interface or a wireless interface. The network communication unit 23 functions as network communication means for the base station apparatus 20. The network communication unit 23 communicates with other apparatuses (for example, the management apparatus 10, the cloud server apparatus CS, and the like) under control of the control unit 24. A configuration of the network communication unit 23 may be similar to that of the network communication unit 11 of the management apparatus 10.

### (Control Unit)

The control unit 24 is a controller that controls each unit of the base station apparatus 20. The control unit 24 is realized by, for example, a processor (hardware processor) such as a central processing unit (CPU) or a micro processing unit (MPU). For example, the control unit 24 is realized by the processor executing various programs stored in the storage device in the base station apparatus 20 by using a random access memory (RAM) or the like as a work area. Note that, the control unit 24 may be realized by an integrated circuit such as an application specific integrated circuit (ASIC) or a field programmable gate array (FPGA). Any of the CPU, the MPU, the ASIC, and the FPGA can be regarded as a controller.

As described above, the control unit 24 controls each unit of the base station apparatus 20, but here, a case where the control unit 24 performs beam control of sidelink communication between the terminal devices 40 (or the mobile devices 50) will be mainly described.

The control unit 24 of the base station apparatus 20 determines a beam to be used for sidelink communication between the terminal devices 40 based on a beam measurement result obtained by the terminal devices 40. Furthermore, the control unit 24 acquires a beam report in the sidelink communication between the terminal devices 40 and executes beam recovery according to the report result.

In order to realize the above-described functions, as illustrated in FIG. 15, the control unit 24 includes a measurement setting unit 241, a result acquisition unit 242, a beam determination unit 243, a report acquisition unit 244, and a recovery determination unit 245. Each block (measurement setting unit 241 to the recovery determination unit 245) constituting the control unit 24 is a functional block indicating a function of the control unit 24. These functional blocks may be software blocks or hardware blocks. For example, each of the functional blocks described above may be one software module realized by software (including a microprogram) or one circuit block on a semiconductor chip (die). Each of the functional blocks may be one processor or one integrated circuit. A configuration method of the functional block is arbitrary. Note that, the control unit 24 may be configured in functional units different from those of the above-described functional block.

The measurement setting unit 241 sets a parameter necessary for beam measurement executed by the terminal device 40. For example, the measurement setting unit 241 sets a resource and a cycle for the terminal device 40 to transmit a reference signal RS to be subjected to the beam measurement. The following (1) to (7) are examples of main reference signals RS to be subjected to the beam measurement.
(1) SLSS (Sidelink Synchronization Signal)
(2) DMRS (Demodulation reference signal)
(3) PTRS (Phase tracking reference signal)
(4) CSI-RS (Channel status indication reference signal)
(5) SRS (Sounding reference signal)
(6) AGC (Automatic gain control) training signal
(7) waveform

The measurement setting unit 241 notifies the terminal device 40 that executes the beam measurement of information regarding the beam measurement (for example, information regarding the reference signal RS, such as a resource or a cycle for transmitting the reference signal RS). The measurement setting unit 241 notifies information regarding the beam measurement (hereinafter, also referred to as measurement information), for example, by using the following (1) to (5).
(1) RRC (Radio Resource Control)
(2) SIB (System Information Block)
(3) PBCH (Physical Broadcast Channel)
(4) PDCCH (Physical Downlink Control Channel)
(5) PDSCH (Physical Downlink Shared Channel)

Note that, the measurement setting unit 241 may, for example, determine a parameter necessary for the beam measurement, such as an output direction of the beam (including a range and a cycle of beam sweeping) and a gain of the beam when the terminal device 40 executes the beam measurement. The measurement setting unit 241 notifies the terminal device 40 of the determined parameter as measurement information.

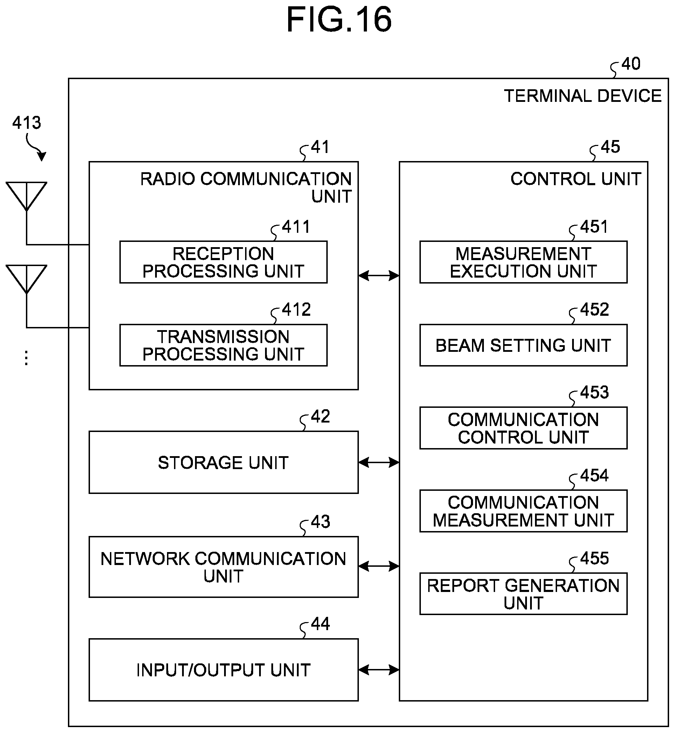

The result acquisition unit 242 acquires a result of the beam measurement from the terminal device 40. Note that, the beam measurement executed by the terminal device 40 will be described later with reference to FIG. 16. The result acquisition unit 242 acquires RS received power (RSRP) of the reference signal RS measured by the terminal device 40. Alternatively, instead of the RSRP, the result acquisition unit 242 may acquire an RS strength indicator (RSSI) or an RS received quality (RSRQ).

Furthermore, in addition to the RSRP of the reference signal RS, the result acquisition unit 242 may acquire, for example, a synchronization signal, a channel busy ratio (CBR), a channel occupancy ratio (CR), position information of the terminal device 40, an interference level (for example, a signal-to-interference noise ratio (SINR)), mobility information, and the like. Note that, the mobility information includes, for example, information regarding a motion parameter of the mobile body, such as speed and a traveling direction of the mobile body in a case where the mobile device 50 such as the vehicle performs the sidelink communication.

The beam determination unit 243 determines a beam to be used by the terminal device 40 at the time of the sidelink communication based on a result of the beam measurement, which is acquired by the result acquisition unit 242. The beam determination unit 243 determines a beam of the terminal device 40 for both transmission and reception in accordance with, for example, reception power on a transmission side or on a reception side of the terminal device 40, an interference level (for example, SINR), or a congestion degree of the beam. The congestion degree of the beam is, for example, the number of terminal devices 40 using the same beam.

For example, the beam determination unit 243 determines an output direction of a beam specified by at least one of an elevation angle of the beam, an azimuth angle of the beam, and a beam width as a beam used by the terminal device 40 in the sidelink communication. Alternatively, the beam determination unit 243 may determine a gain of the beam. The beam determination unit 243 generates beam information including the determined output direction of the beam or the determined gain of the beam. The beam determination unit 243 notifies the terminal device 40 that performs the sidelink communication of the generated beam information via the radio communication unit 21.

Note that, the beam determination unit 243 may generate beam information for one terminal device 40 such that different beams are used respectively in a case where a signal is transmitted and in a case where a signal is received. That is, the beam determination unit 243 may generate beam information for transmission and beam information for reception, respectively and notify one terminal device 40 of the beam information for transmission and the beam information for reception. Here, the beam determination unit 243 determines beams of all the terminal devices 40 that perform the sidelink communication.

Furthermore, the beam determination unit 243 determines a beam for each of a plurality of the sidelink communication. That is, the beam determination unit 243 determines a beam of each of sets of the terminal devices 40 that perform the sidelink communication. As described above, the beam determination unit 243 determines the beam for each of a plurality of the sidelink communication, and thus the beam optimal for each sidelink communication can be determined. Therefore, even in a case where a plurality of the sidelink communication is performed, communication quality of each sidelink communication can be improved.

The report acquisition unit 244 acquires a result of the sidelink communication (hereinafter, also referred to as a beam report) from the terminal device 40 that has performed the sidelink communication by using the beam determined by the beam determination unit 243. The beam report acquired by the report acquisition unit 244 includes at least one of a parameter related to reception power, a parameter related to a channel status, and a parameter related to communication performance.

Examples of the parameters related to the reception power include RSRP, RSSI, RSRQ, and the like. Furthermore, examples of the parameters related to the channel status include a channel quality indicator (CQI), a precoding matrix indicator (PMI), a rank indicator (RI), and the like.

Furthermore, examples of the parameters related to communication performance include CBR feedback, CR feedback, and hybrid ARQ (HARQ) feedback. In addition, examples of the parameters related to the communication performance include position information of the terminal device 40, a traffic pattern, capability, a type of service provided by the terminal device 40, and the like. Furthermore, examples of the parameters related to the communication performance may include QoS requirements of the sidelink communication, QoE requirements of the sidelink communication, and information regarding transmission power and power consumption such as a remaining battery level of the terminal device 40 or the like.

The recovery determination unit 245 determines whether or not the beam used for the sidelink communication between the terminal devices 40 is in a beam failure state based on the beam report acquired by the report acquisition unit 244. In a case where it is determined that the performance of a communication channel is deteriorated when the terminal device 40 performs the sidelink communication by using the beam, the recovery determination unit 245 determines that it is the beam failure. Specifically, the recovery determination unit 245 determines that the performance of the communication channel is deteriorated in a case where the reception power of the terminal device 40 in the sidelink communication is smaller than a predetermined threshold or in a case where interference in the sidelink communication is greater than a predetermined threshold.

The recovery determination unit 245, which has determined that the beam is in a beam failure state, executes beam recovery. Specifically, the recovery determination unit 245 executes the beam recovery on the sidelink communication between the terminal devices 40 by selecting a beam with better performance. The recovery determination unit 245 notifies the terminal device 40 that performs the sidelink communication of the beam information regarding the selected beam via the radio communication unit 21.

Note that, here, the recovery determination unit 245 executes the beam recovery and selects a beam with better performance, but the present disclosure is not limited thereto. For example, in a case where the recovery determination unit 245 determines to execute the beam recovery since the performance of the communication channel is deteriorated, the beam determination unit 243 may execute the beam recovery and select a beam with better performance. In this case, the beam determination unit 243 selects a beam with better performance based on the beam report acquired by the report acquisition unit 244.

Note that, here, a functional configuration of the base station apparatus 20 constituting the network has been described, but the base station apparatus 30 constituting the infrastructure may also have a beam management function in the sidelink communication of the terminal device 40 similarly to that of the base station apparatus 20. In this case, since the base station apparatus 30 has a functional configuration similar to that of the base station apparatus 20, the description thereof is omitted here.

### [Configuration of Terminal Device]

Next, a configuration of the terminal device 40 will be described. The terminal device 40 is a movable radio communication device. For example, the terminal device 40 may be a user equipment (UE) such as a mobile phone or a smart device. The terminal device 40 can perform radio communication with the base station apparatus 20 and the base station apparatus 30. Furthermore, the terminal device 40 can perform sidelink communication with the mobile device 50 and another terminal device 40.

FIG. 16 is a diagram illustrating a configuration example of the terminal device 40 according to the first embodiment of the present disclosure. The terminal device 40 includes a radio communication unit 41, a storage unit 42, a network communication unit 43, an input/output unit 44, and a control unit 45. Note that, the configuration illustrated in FIG. 16 is a functional configuration, and a hardware configuration may be different from the functional configuration. Furthermore, functions of the terminal device 40 may be distributed as functions physically divided into a plurality of configurations to be implemented. Moreover, in the configuration of the terminal device 40, the network communication unit 43 and the input/output unit 44 may not be essential constituent elements.

### (Radio Communication Unit)

The radio communication unit 41 is a radio communication interface that performs radio communication with other radio communication apparatuses and devices (for example, the base station apparatuses 20 and 30, another terminal device 40, and the mobile device 50). The radio communication unit 41 operates under control of the control unit 45. The radio communication unit 41 complies with one or more radio access schemes. For example, the radio communication unit 41 is compatible with both NR and LTE. The radio communication unit 41 may be compatible with W-CDMA or cdma 2000 in addition to NR or LTE. Furthermore, the radio communication unit 21 may be compatible with communication using NOMA.

The radio communication unit 41 includes a reception processing unit 411, a transmission processing unit 412, and an antenna 413. The radio communication unit 41 may include the reception processing unit 411, the transmission processing unit 412, and the antenna 413, respectively in plural. Note that, in a case where the radio communication unit 41 complies with a plurality of the radio access schemes, each unit of the radio communication unit 41 can be configured separately for each radio access scheme. For example, the reception processing unit 411 and the transmission processing unit 412 may be separately configured in LTE and NR.

The reception processing unit 411 processes a downlink signal received via the antenna 413. For example, the reception processing unit 411 performs signal processing such as orthogonal demodulation, AD conversion, and composite processing on the downlink signal to generate downlink data and downlink control information. The reception processing unit 411 outputs the generated downlink data and downlink control information to the control unit 45.

The transmission processing unit 412 performs processing of transmitting uplink control information and uplink data. For example, the transmission processing unit 412 performs signal processing such as encoding processing, DA conversion, and orthogonal modulation on the uplink control information and uplink data input from the control unit 45 to generate an uplink signal. The transmission processing unit 412 transmits the generated uplink signal from the antenna 213.

### (Storage Unit)

The storage unit 42 is a storage device capable of reading and writing data, such as a DRAM, an SRAM, a flash memory, or a hard disk. The storage unit 42 functions as storage means for the terminal device 40.

### (Network Communication Unit)

The network communication unit 43 is a communication interface for communicating with other devices. For example, the network communication unit 43 includes a LAN interface such as an NIC. The network communication unit 43 has a function of directly or indirectly connecting to the network N1. The network communication unit 43 may be a wired interface or a wireless interface. The network communication unit 43 functions as network communication means for the terminal device 40. The network communication unit 43 communicates with other devices under control of the control unit 45.

### (Input/Output Unit)

The input/output unit 44 is a user interface for exchanging information with the user. For example, the input/output unit 44 is an operation device for the user to perform various operations, such as a keyboard, a mouse, an operation key, and a touch panel. Alternatively, the input/output unit 44 is a display device such as a liquid crystal display or an organic electroluminescence (EL) display. The input/output unit 44 may be an acoustic device such as a speaker or a buzzer. Furthermore, the input/output unit 44 may be a lighting device such as a light emitting diode (LED) lamp. The input/output unit 44 functions as input/output means (input means, output means, operation means, or notification means) for the terminal device 40.

### (Control Unit)

The control unit 45 is a controller that controls each unit of the terminal device 40. The control unit 45 is realized by, for example, a processor (hardware processor) such as a central processing unit (CPU) or a micro processing unit (MPU). For example, the control unit 45 is realized by the processor executing various programs stored in the storage device in the terminal device 40 by using a random access memory (RAM) or the like as a work area. Note that, the control unit 45 may be realized by an integrated circuit such as an application specific integrated circuit (ASIC) or a field programmable gate array (FPGA). Any of the CPU, the MPU, the ASIC, and the FPGA can be regarded as a controller.

As described above, the control unit 45 controls each unit of the terminal device 40, but here, a case where the control unit 45 performs the sidelink communication by using a beam will be mainly described.

When starting the sidelink communication using the beam, the control unit 45 of the terminal device 40 first performs beam measurement based on measurement information from the base station apparatus 20 and notifies the base station apparatus 20 of an execution result. After that, the control unit 45 sets a beam based on the beam information acquired from the base station apparatus 20, and performs the sidelink communication by using the set beam. The control unit 45 reports the result of the sidelink communication to the base station apparatus 20.

In order to realize the above-described functions, as illustrated in FIG. 16, the control unit 45 includes a measurement execution unit 451, a beam setting unit 452, a communication control unit 453, a communication measurement unit 454, and a report generation unit 455. Each block (measurement execution unit 451 to the report generation unit 455) constituting the control unit 45 is a functional block indicating a function of the control unit 45. These functional blocks may be software blocks or hardware blocks. For example, each of the functional blocks described above may be one software module realized by software (including a microprogram) or one circuit block on a semiconductor chip (die). Each of the functional blocks may be one processor or one integrated circuit. A configuration method of the functional block is arbitrary. Note that, the control unit 45 may be configured in functional units different from those of the above-described functional block.

The measurement execution unit 451 executes beam measurement based on the measurement information received from the base station apparatus 20. For example, the measurement execution unit 451 receives a reference signal RS transmitted by another terminal device 40 which is a communication partner of the sidelink communication while sweeping a beam having a predetermined output direction and a gain in accordance with an instruction from the base station apparatus 20. For example, the measurement execution unit 451 calculates RSRP of the received reference signal RS. Alternatively, the measurement execution unit 451 may calculate the RSSI and the RSRQ of the reference signal RS.

Furthermore, in addition to the RSRP of the reference signal RS, the measurement execution unit 451 collects, for example, a synchronization signal, a channel busy ratio (CBR), a channel occupancy ratio (CR), position information of the own device, an interference level (for example, a signal-to-interference noise ratio (SINR)), mobility information, and the like. The measurement execution unit 451 notifies the base station apparatus 20 of the calculated or collected information as a measurement report via the radio communication unit 41.

Here, a case where the measurement execution unit 451 executes the beam measurement as a reception side of the reference signal RS has been described, but for example, the measurement execution unit 451 may execute the beam measurement as a transmission side.

In this case, for example, the measurement execution unit 451 transmits the reference signal RS to another terminal device 40 which is a communication partner of the sidelink communication at a predetermined cycle in accordance with an instruction from the base station apparatus 20. At this time, the measurement execution unit 451 may transmit the reference signal RS while sweeping a beam having a predetermined output direction and a gain in accordance with the instruction from the base station apparatus 20. Note that, another terminal device 40 which is a communication partner of the sidelink communication notifies the base station apparatus 20 of the measurement report as the reception side of the reference signal RS.

The beam setting unit 452 sets a beam to be used for the sidelink communication based on the beam information notified from the base station apparatus 20. For example, the beam setting unit 452 sets an output direction of a beam specified by at least one of an elevation angle of the beam, an azimuth angle of the beam, and a beam width as a beam used in the sidelink communication. Alternatively, the beam setting unit 452 may set a gain of the beam. Furthermore, the beam setting unit 452 may set different beams respectively in a case where a signal is transmitted and in a case where a signal is received.

The communication control unit 453 controls the radio communication unit 41 so as to perform the sidelink communication with another terminal device 40 which is a communication partner by using the beam set by the beam setting unit 452. Accordingly, the terminal device 40 can perform the sidelink communication using a beam with another terminal device 40, and quality of the sidelink communication can be improved.

The communication measurement unit 454 measures a communication status of the sidelink communication by the communication control unit 453. For example, the communication measurement unit 454 measures at least one of a parameter related to reception power, a parameter related to a channel status, and a parameter related to communication performance at a predetermined cycle.

Examples of the parameters related to the reception power include RSRP, RSSI, RSRQ, and the like. Furthermore, examples of the parameters related to the channel status include a channel quality indicator (CQI), a precoding matrix indicator (PMI), a rank indicator (RI), and the like.

Furthermore, examples of the parameters related to communication performance include CBR feedback, CR feedback, and hybrid ARQ (HARQ) feedback. In addition, examples of the parameters related to the communication performance include position information of the terminal device 40, a traffic pattern, capability, a type of service provided by the terminal device 40, and the like. Furthermore, examples of the parameters related to the communication performance may include QoS requirements of the sidelink communication, QoE requirements of the sidelink communication, and information regarding transmission power and power consumption such as a remaining battery level of the terminal device 40 or the like.

The report generation unit 455 generates a result of the sidelink communication as a beam report based on each parameter measured by the communication measurement unit 454, and notifies the base station apparatus 20 of the beam report. The report generation unit 455 notifies the base station apparatus 20 of the beam report by using, for example, uplink PUCCH or uplink PUSCH. Note that, a resource for notifying the beam report is configured by the notification from the base station apparatus 20. Alternatively, the resource may be configured in advance.

Note that, in a case where the base station apparatus 20 executes beam recovery based on the beam reporting performed by the report generation unit 455, for example, the beam setting unit 452 resets the beam based on the beam recovery by the base station apparatus 20. The communication control unit 453 performs the sidelink communication by using the beam reset by the beam setting unit 452.

### <2-3. Flow of Sidelink Communication Processing>

Next, a flow of the sidelink communication processing using a beam by the information processing system 1 will be described with reference to FIG. 17. FIG. 17 is a sequence diagram illustrating a flow of the sidelink communication processing according to the first embodiment of the present disclosure.

As illustrated in FIG. 17, the base station apparatus 20 sets a parameter necessary for the beam measurement in the terminal devices 40₁ and 40₂ (Step S101). The base station apparatus 20 notifies the terminal devices 40₁ and 40₂ of the measurement information including the set parameter (Step S102).

Next, the terminal devices 40₁ and 40₂ execute the beam measurement (Step S103). The terminal devices 40₁ and 40₂ notify the base station apparatus 20 of a result of the executed beam measurement as a measurement report (Steps S104 and S105) .

The base station apparatus 20 determines a beam to be used for the sidelink communication of the terminal devices 40₁ and 40₂ based on the received measurement report (Step S106). The base station apparatus 20 determines beams for transmission and reception, respectively for the terminal devices 40₁ and 40₂. The base station apparatus 20 notifies the terminal devices 40₁ and 40₂ of beam information regarding the determined beam (Step S107) .

The terminal devices 40₁ and 40₂ that have received the beam information set beams (Steps S108 and S109), and perform the sidelink communication by using the set beams (S110). The terminal devices 40₁ and 40₂ measure a communication status of the sidelink communication being executed (Steps S111 and S112), and notify the base station apparatus 20 of the measurement result as a beam report (Steps S113 and S114).

The base station apparatus 20 that has received the beam report determines whether or not it is a beam failure, and executes the beam recovery as necessary (Step S115). The base station apparatus 20 notifies the terminal devices 40₁ and 40₂ of a result of the beam recovery as beam information (Step SS116). Note that, the terminal devices 40₁ and 40₂ measure the communication status in Steps S111 and S112 at a predetermined cycle and notify the beam report while performing the sidelink communication by using the beam based on the instruction from the base station apparatus 20. Furthermore, in FIG. 17, a case where the base station apparatus 20 executes the beam recovery has been described as an example. However, in a case where it is determined that the base station apparatus 20 is not in the beam failure state, Step S115 executed by the base station apparatus 20 will be omitted.

### <3. Modified Example of First Embodiment>

### <3-1. First Modified Example>

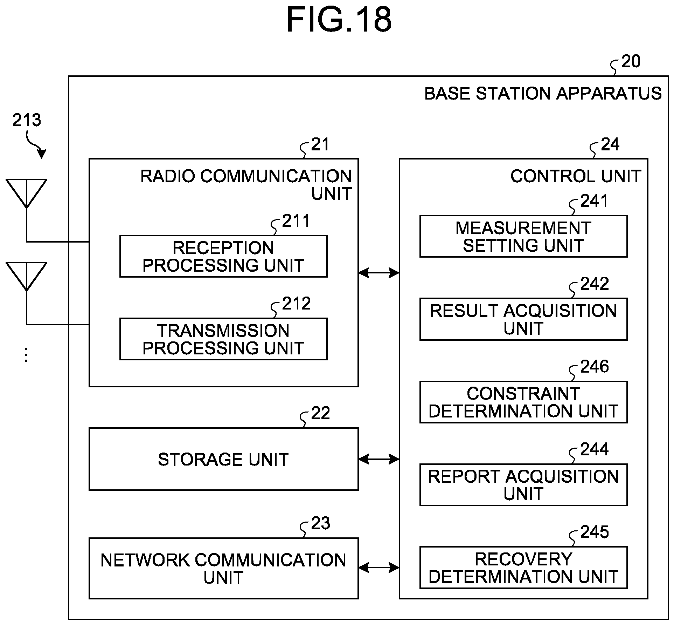

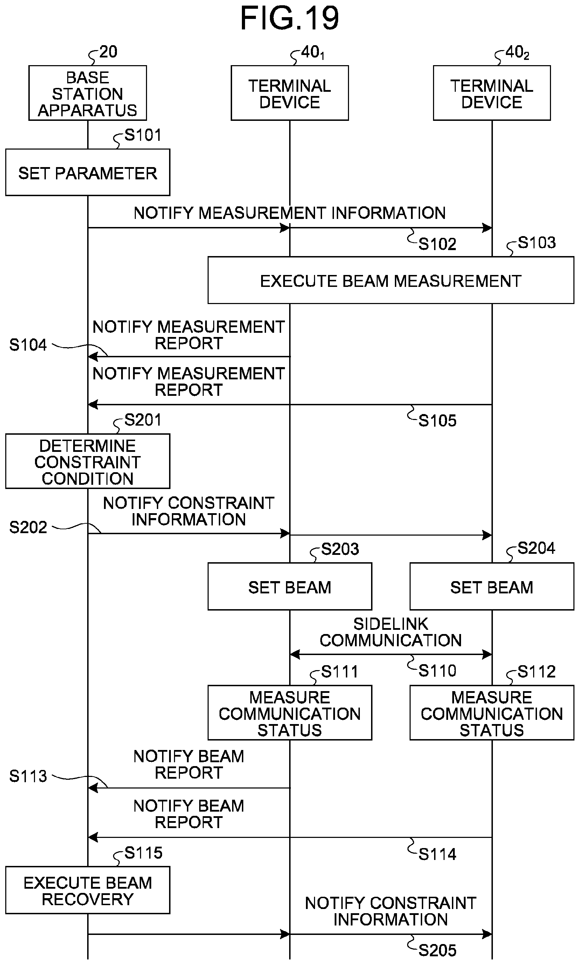

Next, a first modified example of the information processing system 1 according to the first embodiment of the present disclosure will be described with reference to FIGS. 18 and 19. In the present modified example, the base station apparatus 20 does not determine the beam, but a range of the beam (or a constraint condition for determining the beam) of the terminal device 40 is determined, and the beam to be actually used for communication is determined by the terminal device 40.

FIG. 18 is a diagram illustrating a configuration example of the base station apparatus 20 according to the first modified example of the first embodiment of the present disclosure. The base station apparatus 20 illustrated in FIG. 18 includes a constraint determination unit 246 instead of the beam determination unit 243. The other constituent elements are the same as those in FIG. 15.

The constraint determination unit 246 determines a constraint condition of a beam to be used by the terminal device 40 at the time of the sidelink communication based on a result of the beam measurement, which is acquired by the result acquisition unit 242. The constraint determination unit 246 determines, for example, available ranges of an elevation angle of the beam, an azimuth angle of the beam, and a beam width as constraint conditions of the output direction of the beam. Alternatively, the constraint determination unit 246 may determine a range of a gain of the beam as the constraint condition. The constraint determination unit 246 notifies the terminal device 40 of the determined constraint condition as constraint information.

Note that, the recovery determination unit 245 executes the beam recovery by changing the constraint condition when it is determined to be a beam failure. The recovery determination unit 245 notifies the terminal device 40 of the changed constraint condition.

The terminal device 40 according to the present modified example has a functional configuration similar to that of the terminal device 40 illustrated in FIG. 16 except that the beam setting unit 452 determines a beam based on the constraint information from the base station apparatus 20. Note that, a method in which the terminal device 40 determines a beam is the same as a determination method in the beam determination unit 243 of the base station apparatus 20 illustrated in FIG. 15 except that the beam is determined in the range of the constraint information, and thus the description thereof will be omitted.

FIG. 19 is a sequence diagram illustrating a flow of the sidelink communication processing according to the first modified example of the first embodiment of the present disclosure. Note that, the same processing as the sidelink communication processing illustrated in FIG. 17 is denoted by the same reference numeral, and the description thereof will be omitted.

When receiving the measurement reports from the terminal devices 40₁ and 40₂, the base station apparatus 20 determines beam constraint conditions on the basis of the measurement reports (Step S201). The base station apparatus 20 notifies the terminal devices 40₁ and 40₂ of constraint information regarding the determined constraint condition (Step S202).

The terminal devices 40₁ and 40₂ determine beams based on the constraint conditions (Steps S203 and S204), and perform the sidelink communication by using the determined beams (Step S110).

Furthermore, in a case where the beam recovery is executed in Step S115, the base station apparatus 20 notifies the terminal devices 40₁ and 40₂ of a result of the beam recovery as the constraint information (Step SS205) .

As described above, since the beam setting unit 452 determines a beam based on the constraint information, the beam setting unit 452 can reduce a load of beam determination processing as compared with the case of determining the beam without the constraint condition. Furthermore, since the base station apparatus 20 only needs to determine the constraint condition instead of the beam itself, the load of the beam determination processing can be reduced.

### <3-2. Second Modified Example>

Note that, in the first embodiment and the first modified example of the first embodiment, which are described above, the terminal devices 40₁ and 40₂ that perform the sidelink communication are in coverage of the cell of the base station apparatus 20. Therefore, in a case where one of the terminal devices 40₁ and 40₂ is outside the coverage (partial coverage) of the cell of the base station apparatus 20, the terminal device outside the coverage cannot receive the beam information and the like from the base station apparatus 20.

In such a case, in the present modified example, for example, the terminal device (here, for example, the terminal device 40₁) in the coverage relays beam information or the like notified by the base station apparatus 20 to the terminal device (here, for example, the terminal device 40₂) outside the coverage. Accordingly, the terminal device 40₂ outside the coverage of the base station apparatus 20 can acquire information necessary for setting the beam, and the terminal devices 40₁ and 40₂ can perform the sidelink communication using the beam. Note that, in a similar manner, the measurement report or the like notified to the base station apparatus 20 by the terminal device 40₂ also can be relayed to the terminal device 40₁ to be notified to the base station apparatus 20.

Note that, here, the device that performs a relay between the terminal device 40₂ and the base station apparatus 20 is the terminal device 40₁, but is not limited thereto, and for example, the terminal device 40 other than the terminal device 40₁, the mobile device 50, or the base station apparatus other than the base station apparatus 20 may perform a relay.

### <4. Second Embodiment>

### <4-1. Overview of Second Embodiment>

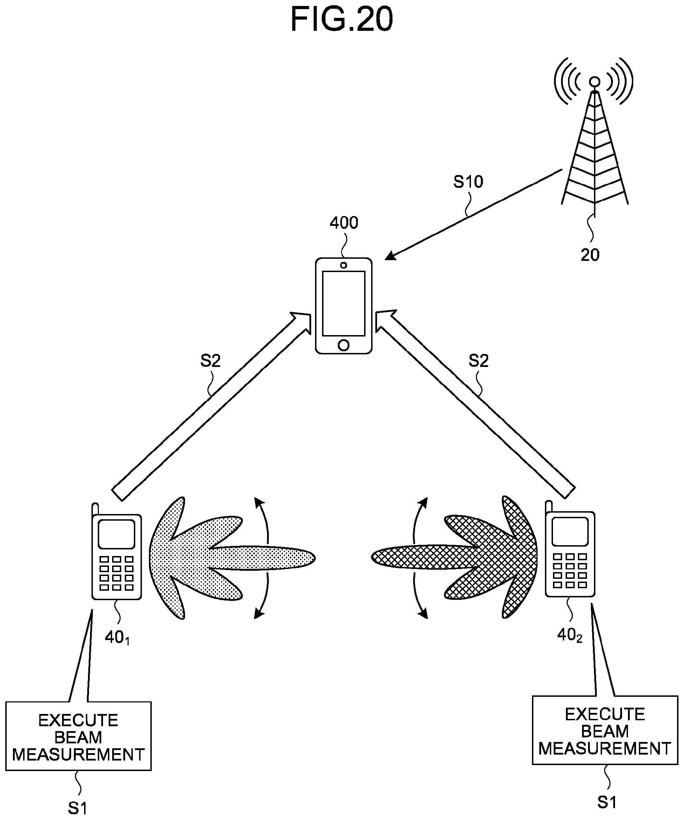

FIG. 20 is a diagram illustrating an overview of the sidelink communication according to a second embodiment of the present disclosure. In the information processing system according to the second embodiment of the present disclosure, the base station apparatus 20 does not determine a beam, and a terminal device (hereinafter, also referred to as a master terminal) 400 to which authorization to determine the beam is set by the base station apparatus 20 determines a beam.

As illustrated in FIG. 20, the information processing system includes the base station apparatus 20, the master terminal 400, and terminal devices 40₁ and 40₂ that perform the sidelink communication. In the second embodiment of the present disclosure, the master terminal 400 manages a beam in the sidelink communication of the terminal device 40.

As illustrated in FIG. 20, the base station apparatus 20 designates the terminal device 400 as a master terminal that executes beam management of the sidelink communication between the terminal devices 40₁ and 40₂ (Step S10). Note that, a beam management method of the master terminal 400 is the same as the beam management by the base station 20 illustrated in FIGS. 10 and 11, and thus the description thereof will be omitted.

### <4-2. Configuration of Information Processing System>

### [Configuration of Base Station Apparatus]

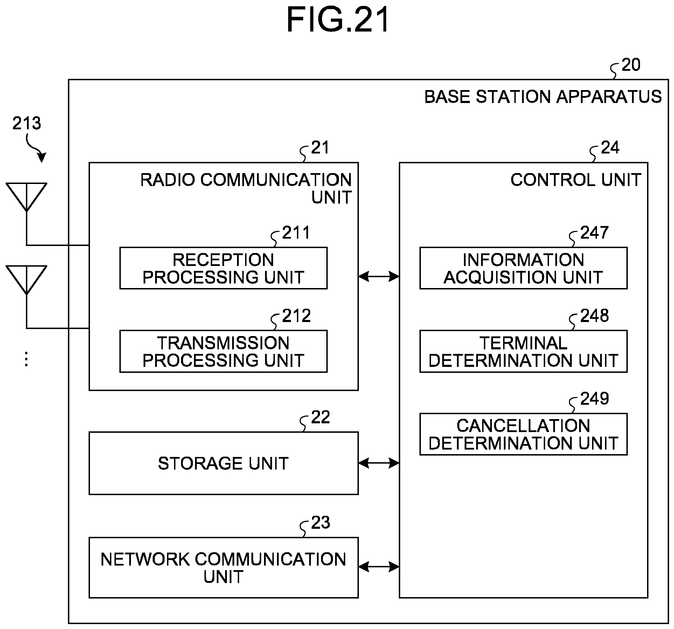

Next, FIG. 21 is a diagram illustrating a configuration example of the base station apparatus 20 according to the second embodiment of the present disclosure. In the base station apparatus 20 illustrated in FIG. 21, the control unit 24 includes an information acquisition unit 247, a terminal determination unit 248, and a cancellation determination unit 249 instead of the measurement setting unit 241 to the recovery determination unit 245.

The information acquisition unit 247 acquires information necessary for determining the master terminal 400 from the terminal device 40. The information acquisition unit 247 acquires, for example, information regarding capability from the terminal device 40. Alternatively, the information acquisition unit 247 may acquire position information of the terminal device 40.

The terminal determination unit 248 determines the master terminal 400 based on the information acquired by the information acquisition unit 247. For example, the terminal determination unit 248 determines the terminal device 40 near the terminal devices 40₁ and 40₂ that perform the sidelink communication as the master terminal 400 based on the position information of the terminal device 40 acquired by the information acquisition unit 247. The terminal determination unit 248 transmits an authorization notification for giving authorization to the determined master terminal 400 via the radio communication unit 21.

For example, the terminal determination unit 248 gives authorization by indicating a procedure or a parameter of the determined master terminal 400. The terminal determination unit 248 performs such an indication by using, for example, RRC, SIB, downlink control information (DCI), PDCCH, PDSCH, or the like.

The cancellation determination unit 249 determines cancellation of the authorization given to the master terminal 400. The cancellation determination unit 249 determines the cancellation of the authorization based on, for example, the capability and the position information of the master terminal 400. Alternatively, the cancellation determination unit 249 may determine the cancellation of the authorization according to a cancellation request from the master terminal 400 or a communication status of the terminal device 40.

For example, in a case where it is determined that quality of communication performed by the terminal device 40 other than the terminal devices 40₁ and 40₂ is deteriorated due to the beam management of the master terminal 400, the cancellation determination unit 249 cancels the authorization for the master terminal 400. Note that, the cancellation determination unit 249 determines, according to a report from the terminal device 40, whether or not the quality of the communication performed by the terminal device 40 other than the terminal devices 40₁ and 40₂ is deteriorated.

Alternatively, the cancellation determination unit 249 may cancel the authorization for the master terminal 400 in a case where it is determined that at least one of the terminal devices 40₁ and 40₂ is out of the coverage of the master terminal 400. For example, the cancellation determination unit 249 performs the determination based on the position information of the terminal devices 40₁ and 40₂, and the master terminal 400. Alternatively, the cancellation determination unit 249 may perform the determination based on a notification from the master terminal 400 or the terminal devices 40₁ and 40₂.

The cancellation determination unit 249 transmits a cancellation notification to the master terminal 400 for which the cancellation is determined via the radio communication unit 21. The terminal determination unit 248 transmits the cancellation notification by using, for example, RRC, SIB, downlink control information (DCI), PDCCH, PDSCH, or the like.

Note that, for example, in a case where the terminal determination unit 248 sets a valid period in which the authorization is given to the master terminal 400, the cancellation determination unit 249 may omit the determination of cancellation and the transmission of cancellation notification by including the valid period in which the authorization is given.

### [Configuration of Master Terminal]

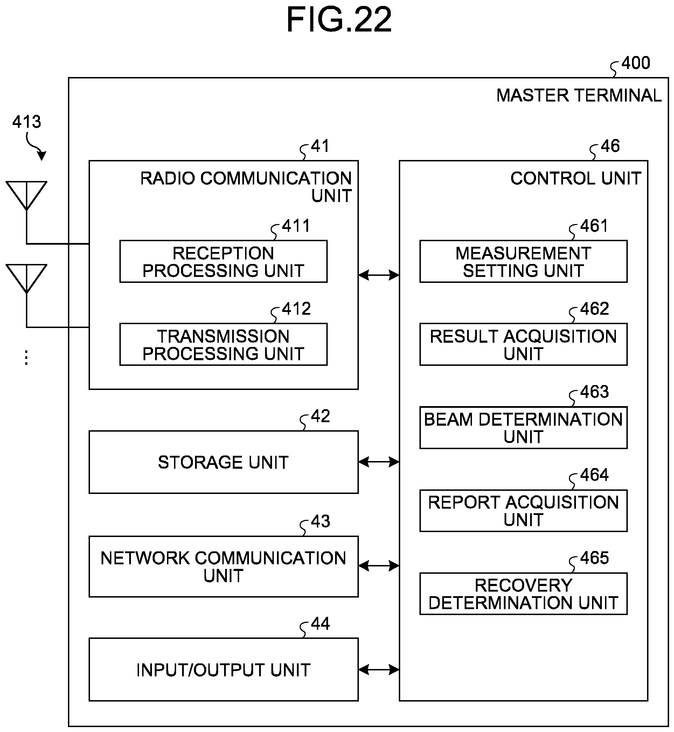

Next, a configuration of the master terminal 400 will be described with reference to FIG. 22. FIG. 22 is a diagram illustrating a configuration example of the master terminal 400 according to the second embodiment of the present disclosure. The master terminal 400 is a movable radio communication device. For example, the master terminal 400 may be a user equipment (UE) such as a mobile phone or a smart device. Alternatively, the master terminal 400 may be a UE-type RSU. The master terminal 400 can perform radio communication with the base station apparatus 20 and the base station apparatus 30. Furthermore, the master terminal 400 can perform the sidelink communication with the mobile device 50 and another terminal device 40.

As illustrated in FIG. 22, the master terminal 400 includes the radio communication unit 41, the storage unit 42, the network communication unit 43, the input/output unit 44, and a control unit 46. Note that, the configuration illustrated in FIG. 22 is a functional configuration, and a hardware configuration may be different from the functional configuration. Furthermore, functions of the master terminal 400 may be distributed as functions physically divided into a plurality of configurations to be implemented. Moreover, in the configuration of the master terminal 400, the network communication unit 43 and the input/output unit 44 may not be essential constituent elements.

Note that, functional configurations of the radio communication unit 41, the storage unit 42, the network communication unit 43, and the input/output unit 44 are the same as those of the radio communication unit 41, the storage unit 42, the network communication unit 43, and the input/output unit 44 of the terminal device 40 illustrated in FIG. 16, and thus, the description thereof will be omitted.

The control unit 46 is a controller that controls each unit of the master terminal 400. The control unit 46 is realized by, for example, a processor (hardware processor) such as a central processing unit (CPU) or a micro processing unit (MPU). For example, the control unit 46 is realized by the processor executing various programs stored in the storage device in the master terminal 400 by using a random access memory (RAM) or the like as a work area. Note that, the control unit 46 may be realized by an integrated circuit such as an application specific integrated circuit (ASIC) or a field programmable gate array (FPGA). Any of the CPU, the MPU, the ASIC, and the FPGA can be regarded as a controller.

As described above, the control unit 46 controls each unit of the master terminal 400, but here, a case where the control unit 46 is given the authorization from the base station apparatus 20 and performs beam control of the sidelink communication between the terminal devices 40 (or the mobile devices 50) will be mainly described.

The control unit 46 of the master terminal 400 determines a beam to be used for sidelink communication between the terminal devices 40 based on a beam measurement result obtained by the terminal devices 40. Furthermore, the control unit 46 acquires a beam report in the sidelink communication between the terminal devices 40 and executes beam recovery according to the report result.

In order to realize the above-described functions, as illustrated in FIG. 22, the control unit 46 includes a measurement setting unit 461, a result acquisition unit 462, a beam determination unit 463, a report acquisition unit 464, and a recovery determination unit 465. Each block (measurement setting unit 461 to the recovery determination unit 465) constituting the control unit 46 is a functional block indicating a function of the control unit 46. These functional blocks may be software blocks or hardware blocks. For example, each of the functional blocks described above may be one software module realized by software (including a microprogram) or one circuit block on a semiconductor chip (die). Each of the functional blocks may be one processor or one integrated circuit. A configuration method of the functional block is arbitrary. Note that, the control unit 46 may be configured in functional units different from those of the above-described functional block.

Note that, a specific functional configuration of each block (measurement setting unit 461 to the recovery determination unit 465) constituting the control unit 46 is the same as each block (measurement setting unit 241 to the recovery determination unit 245) constituting the control unit 24 of the base station apparatus 20 illustrated in FIG. 15, and thus the description thereof will be omitted.

### <4-3. Flow of Sidelink Communication Processing>

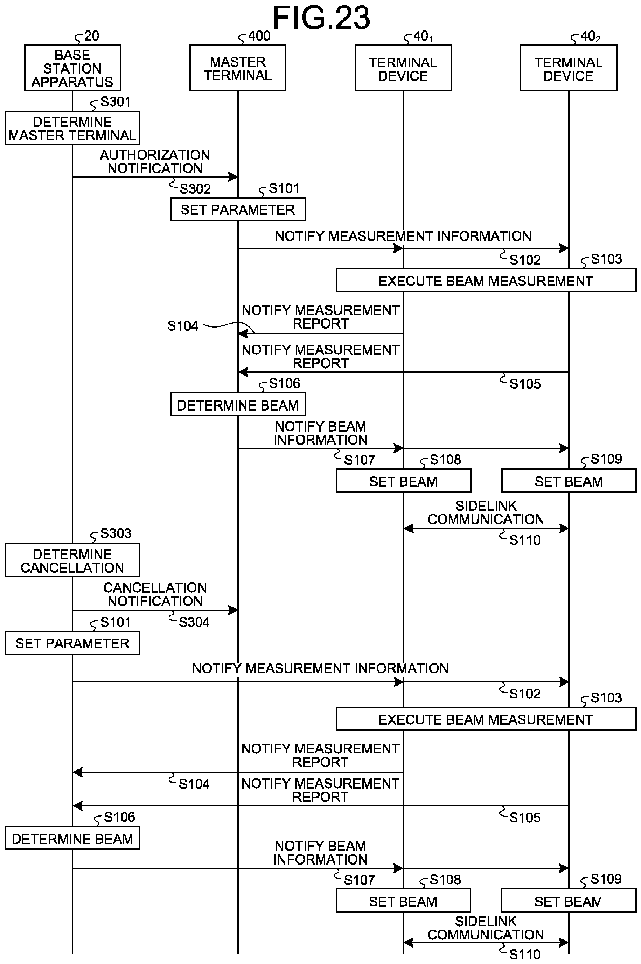

Next, FIG. 23 is a sequence diagram illustrating a flow of the sidelink communication processing according to the second embodiment of the present disclosure.

As illustrated in FIG. 23, the base station apparatus 20 determines the master terminal 400 (Step S301). The base station apparatus 20 transmits an authorization notification to the determined master terminal (Step S302). Note that, hereinafter, processing of Steps S101 to S110 are the same as the processing of FIG. 17 except that the base station apparatus 20 is replaced with the master terminal 400, and thus the description thereof will be omitted.

Subsequently, when the base station apparatus 20 determines to cancel the authorization for the master terminal 400 (Step S303), the base station apparatus 20 transmits the cancellation notification to the master terminal 400 (Step S304). Accordingly, when the authorization for the master terminal 400 is canceled, the base station apparatus 20 executes beam management of the sidelink communication of the terminal devices 40₁ and 40₂ instead of the master terminal 400. Since the following processing is the same as the processing of FIG. 17, the description thereof will be omitted.

### <5. Modified Example of Second Embodiment>

### <5-1. First Modified Example>

In the second embodiment described above, the master terminal 400 determines the beams of the sidelink communication of the terminal devices 40₁ and 40₂. However, for example, the master terminal 400 may determine the beam constraint conditions.

In this case, similarly to the base station apparatus 20 according to the first modified example of the first embodiment, the master terminal 400 includes the constraint determination unit 246 instead of the beam determination unit 243, and determines a constraint condition of a beam to be used by the terminal device 40 at the time of the sidelink communication based on a result of the beam measurement, which is acquired by the result acquisition unit 242. Similarly, the terminal device 40 that performs the sidelink communication determines a beam based on the constraint information notified by the master terminal 400.

As described above, even in a case where the master terminal 400 executes beam management, the master terminal 400 can execute the beam management by determining the beam constraint conditions.

### <5-2. Second Modified Example>

In the second embodiment described above, after the authorization for the master terminal 400 is canceled, the base station apparatus 20 executes the beam management of the sidelink communication of the terminal devices 40₁ and 40₂, but the present disclosure is not limited thereto.

For example, after the authorization for the master terminal 400 is cancelled, the base station apparatus 20 may determine another terminal device 40 as a new master terminal and give the authorization. Accordingly, a master terminal different from the master terminal 400 executes beam management of the sidelink communication of the terminal devices 40₁ and 40₂.

### <6. Other Modified Examples>

In the first and second embodiments and the modified examples of the present disclosure described above, the beam determination units 243 and 463 determine the beam based on the measurement report, but the present disclosure is not limited thereto. For example, the base station apparatus 20 or the master terminal 400 may determine the beam based on machine learning.

Specifically, the base station apparatus 20 or the master terminal 400 learns, in advance, a model in which a result of the measurement report (for example, position information of the terminal device 40, RSRP of the reference signal RS, or the like) is input and beam information is output. The learning of the model is performed by, for example, deep learning (DNN). Alternatively, in addition to the DNN, various neural networks such as Recurrent Neural Networks (RNN) and Convolutional Neural Network (CNN) can be used. Furthermore, a learning model is not limited to the learning model using a DNN or the like, and a learning model learned by using various other machine learning such as a decision tree or a support vector machine can also be used. Note that, for example, such a model is stored in the storage units 22 and 42.

The base station apparatus 20 or the master terminal 400 uses the result of the measurement report acquired from the terminal device 40 as an input, and determines a beam based on the machine learning model. Note that, the base station apparatus 20 or the master terminal 400 may determine a beam by machine learning based on, for example, position information of the terminal device 40, an outputtable beam, and a communication status of another terminal device 40. In this manner, by using the machine learning, the base station apparatus 20 or the master terminal 400 can determine a beam to be used for the sidelink communication of the terminal device 40 by using information other than the results of the beam sweeping and the beam measurement. Accordingly, the beam sweeping and the beam measurement by the terminal device 40 can be omitted, and a processing load of the terminal device 40 can be reduced.

In the first and second embodiments and the modified examples of the present disclosure described above, the terminal device 40 that performs the sidelink communication executes measurement, but the present disclosure is not limited thereto. For example, a terminal device (hereinafter, also referred to as a proxy terminal) other than the terminal device 40 that performs the sidelink communication may execute measurement instead of the terminal device 40.

In this case, the base station apparatus 20 may designate a proxy terminal that executes measurement, or the terminal device 40 that performs the sidelink communication may designate a proxy terminal that executes measurement. For example, when the base station apparatus 20 or the terminal device 40 that performs sidelink communication transmits a request for proxy measurement, the proxy terminal executes the proxy measurement.

The proxy terminal notifies the base station apparatus 20 or the terminal device 40 that performs the sidelink communication of the measurement result. In a case where the terminal device 40 receives the measurement result, the terminal device 40 notifies the base station apparatus 20 of the received measurement result.

In the first and second embodiments and the modified examples of the present disclosure described above, each of the terminal devices 40₁ and 40₂, which performs the sidelink communication, executes beam reporting to the base station apparatus 20, but the present disclosure is not limited thereto.

The terminal device 40 may notify the terminal device 40 which is a communication partner of the beam report by using PSCCH of the sidelink communication. For example, the terminal device 40₁ on the reception side may notify the terminal device 40₂ on the transmission side of the beam report, and the terminal device 40₂ may notify the base station apparatus 20 of the beam report of the terminal device 40₁ and the beam report of the own device by using uplink PUCCH. Note that, the terminal device 40₂ on the transmission side may notify the terminal device 40₁ on the reception side of the beam report, and the terminal device 40₁ may collectively notify the base station apparatus 20 of the beam reports of the terminal devices 40₁ and 40₂.

Alternatively, for example, each of the terminal devices 40₁ and 40₂ may notify the communication partner of the beam report. In this case, for example, one terminal device 40 such as the terminal device on the transmission side notifies the base station apparatus 20 of the beam reports of the terminal devices 40₁ and 40₂ as a representative.

Note that, here, the terminal device 40 notifies the communication partner of the beam report by using PSCCH, but the beam report may be notified by using, for example, PSSCH or PSFCH. Furthermore, the terminal device 40 may notify the base station apparatus 20 of the beam report by using PUSCH instead of PUCCH.

In the first and second embodiments and the modified examples of the present disclosure described above, the base station apparatus 20 or the master terminal 400 determines beam failure and executes beam recovery, but the present disclosure is not limited thereto. The terminal device 40 may determine the beam failure and execute the beam recovery. Alternatively, the terminal device 40 may determine the beam failure, and request the base station apparatus 20 or the master terminal 400 to execute the beam recovery as necessary.

Alternatively, for example, in a case where the terminal device 40₁ determines the beam failure, the terminal device 40₂ which is a communication partner may be requested to determine the beam failure. In this case, the terminal device 40₂, which has been requested to determine the beam failure, may request the base station apparatus or the master terminal 400 to execute the beam recovery as necessary, and the terminal device 40₂ may execute the beam recovery.

Alternatively, the terminal device 40₂ may notify the terminal device 40₁ of the determination result of the beam failure. In this case, the terminal device 40₁ may request the base station apparatus or the master terminal 400 to execute the beam recovery, and the terminal device 40₁ may execute the beam recovery.

In the second embodiment and the modified examples described above, a case where there is one master terminal 400 has been described as an example. However, the base station apparatus 20 may give authorization to a plurality of the master terminals 400. For example, in a case where a plurality of the sidelink communication are performed, the base station apparatus 20 may set the master terminal 400 for each sidelink communication. Alternatively, one master terminal 400 may be set for a plurality of the sidelink communication. A plurality of the master terminals 400, which perform beam management of one or more sidelink communication, may be set. Note that, a plurality of the master terminals 400 share information with each other by using PSCCH.

In the first and second embodiments and the modified examples of the present disclosure described above, a case where NR sidelink communication is adopted as the radio access technology has been described as an example, but the present disclosure is not limited thereto. The technology according to the present disclosure can be applied to a radio access technology other than NR. For example, the information processing system 1 may adopt LTE as the radio access technology, or may adopt both LTE and NR. Alternatively, the information processing system 1 may adopt a radio access technology other than NR and LTE.

Furthermore, the base station apparatuses 20 and 30, the terminal device 40, the mobile device 50, and the master terminal 400 of the present embodiment may be realized by a dedicated computer system or may be realized by a general-purpose computer system.

For example, a program for executing the above-described operation is stored in a computer-readable recording medium such as an optical disk, a semiconductor memory, a magnetic tape, a flexible disk, or a hard disk, and distributed. For example, the program is installed in a computer, and the above-described processing is executed to configure a control device. At this time, the control device may be an external device (for example, a personal computer) of the base station apparatuses 20 and 30, the terminal device 40, the mobile device 50, or the master terminal 400. Furthermore, the control device may be an internal device (for example, the control unit 13 or a control unit 140) of the base station apparatuses 20 and 30, the terminal device 40, the mobile device 50, or the master terminal 400.

Furthermore, the communication program may be stored in a disk device included in a server apparatus on a network such as the Internet, and the communication program may be downloaded to the computer. Furthermore, the above-described functions may be realized by cooperation of an operating system (OS) and application software. In this case, a part other than the OS may be stored in a medium and distributed, or the part other than the OS may be stored in the server apparatus and downloaded to the computer.

Furthermore, among the processing described in the embodiments described above, all or a part of the processing described as being performed automatically can be performed manually, or all or a part of the processing described as being performed manually can be performed automatically by a known method. In addition, processing procedure, specific name, and information including various data and parameters, which are illustrated in the document and the drawings can be arbitrarily changed unless otherwise specified. For example, various information illustrated in each drawing are not limited to the illustrated information.

Furthermore, each constituent element of each device illustrated in the drawings is functionally conceptual element, and is not necessarily physically configured as illustrated in the drawings. That is, a specific form of distribution and integration of each device is not limited to the illustrated form, and all or a part thereof can be functionally or physically distributed or integrated in an arbitrary unit in accordance with various loads, usage state, and the like.

Furthermore, the above-described embodiments can be appropriately combined in a region in which the processing contents do not contradict each other.

### <7. Conclusion>

As described above, according to each embodiment of the present disclosure, the communication control apparatus (for example, the base station apparatus 20 and the master terminal 400) includes the control unit (for example, the control units 24 and 46). The control unit notifies at least one of a first communication device and a second communication device of beam information regarding a beam used by the first communication device or the second communication device in the sidelink communication between the first communication device (for example, the terminal device 40₁) and the second communication device (for example, the terminal device 40₂).

Accordingly, the first and second communication devices can perform the sidelink communication using a beam, and high quality sidelink communication can be performed. Furthermore, an appropriate beam can be set without increasing additional processing of the first and second communication devices, and communication quality of the sidelink communication can be further improved.

Although each of the embodiments of the present disclosure has been described above, the technical scope of the present disclosure is not limited to the above-described embodiments as it is, and various modifications can be made without departing from the gist of the present disclosure. Furthermore, constituent elements of different embodiments and modified examples may be appropriately combined.

Furthermore, the effect of each of the embodiments described in the present specification is merely an example and is not limited, and other effects may be obtained.

Note that, the present technology can also have the following configurations.
(1) A communication control apparatus comprising
   a control unit that notifies at least one of a first communication device and a second communication device of beam information regarding a beam used by the first communication device or the second communication device in sidelink communication between the first communication device and the second communication device.
(2) The communication control apparatus according to (1), wherein
   the communication control apparatus is given authorization to control the beam of the sidelink communication from a base station apparatus and generates the beam information.
(3) The communication control apparatus according to (2), wherein
   the communication control apparatus cancels the authorization according to a cancellation notification from the base station apparatus.
(4) The communication control apparatus according to any one of (1) to (3), wherein
   the control unit notifies the beam information including information regarding at least one of an output direction of the beam and a gain of the beam, and
   at least one of the first communication device and the second communication device performs the sidelink communication by using the beam generated based on the beam information.
(5) The communication control apparatus according to any one of (1) to (3), wherein
   the control unit notifies at least one of the first communication device and the second communication device of the beam information including a constraint condition of the beam, and
   at least one of the first communication device and the second communication device determines the beam in a range of the constraint condition and performs the sidelink communication by using the determined beam.
(6) The communication control apparatus according to (5), wherein
   the constraint condition includes at least one of a range of an output direction of the beam and a range of a gain of the beam.
(7) The communication control apparatus according to any one of (1) to (6), wherein
   the control unit generates the beam information based on beam measurement information acquired from at least one of the first communication device and the second communication device.
(8) The communication control apparatus according to any one of (1) to (6), wherein
   the control unit generates the beam information based on beam measurement information acquired from a third communication device different from the first communication device and the second communication device.
(9) The communication control apparatus according to (7) or(8), wherein
   the beam measurement information includes information regarding a measurement result of a reference signal transmitted by one of the first communication device or the second communication device.
(10) A communication control method comprising
   notifying at least one of a first communication device and a second communication device of beam information regarding a beam used by the first communication device or the second communication device in sidelink communication between the first communication device and the second communication device.
(11) A communication control program causing a computer to function as
   a control unit that notifies at least one of a first communication device and a second communication device of beam information regarding a beam used by the first communication device or the second communication device in sidelink communication between the first communication device and the second communication device.

### Reference Signs List

1 INFORMATION PROCESSING SYSTEM
10 MANAGEMENT APPARATUS
20, 30 BASE STATION APPARATUS
40 TERMINAL DEVICE
50 MOBILE DEVICE
11, 23, 43 NETWORK COMMUNICATION UNIT
12, 22, 42 STORAGE UNIT
13, 24, 45 CONTROL UNIT
21, 41 RADIO COMMUNICATION UNIT
44 INPUT/OUTPUT UNIT
211, 411 RECEPTION PROCESSING UNIT
212, 412 TRANSMISSION PROCESSING UNIT
213, 413 ANTENNA

## Claims

1. A communication control apparatus comprising
a control unit that notifies at least one of a first communication device and a second communication device of beam information regarding a beam used by the first communication device or the second communication device in sidelink communication between the first communication device and the second communication device.

2. The communication control apparatus according to claim 1, wherein
the communication control apparatus is given authorization to control the beam of the sidelink communication from a base station apparatus and generates the beam information.

3. The communication control apparatus according to claim 2, wherein
the communication control apparatus cancels the authorization according to a cancellation notification from the base station apparatus.

4. The communication control apparatus according to claim 3, wherein
the control unit notifies the beam information including information regarding at least one of an output direction of the beam and a gain of the beam, and
at least one of the first communication device and the second communication device performs the sidelink communication by using the beam generated based on the beam information.

5. The communication control apparatus according to claim 3, wherein
the control unit notifies at least one of the first communication device and the second communication device of the beam information including a constraint condition of the beam, and
at least one of the first communication device and the second communication device determines the beam in a range of the constraint condition and performs the sidelink communication by using the determined beam.

6. The communication control apparatus according to claim 5, wherein
the constraint condition includes at least one of a range of an output direction of the beam and a range of a gain of the beam.

7. The communication control apparatus according to claim 3, wherein
the control unit generates the beam information based on beam measurement information acquired from at least one of the first communication device and the second communication device.

8. The communication control apparatus according to claim 3, wherein
the control unit generates the beam information based on beam measurement information acquired from a third communication device different from the first communication device and the second communication device.

9. The communication control apparatus according to claim 7, wherein
the beam measurement information includes information regarding a measurement result of a reference signal transmitted by one of the first communication device or the second communication device.

10. A communication control method comprising
notifying at least one of a first communication device and a second communication device of beam information regarding a beam used by the first communication device or the second communication device in sidelink communication between the first communication device and the second communication device.

11. A communication control program causing a computer to function as
a control unit that notifies at least one of a first communication device and a second communication device of beam information regarding a beam used by the first communication device or the second communication device in sidelink communication between the first communication device and the second communication device.
